(19) Europäisches Patentamt
European Patent Office
Office européen des brevets

(11) **EP 4 651 362 A1**

(12) **EUROPEAN PATENT APPLICATION**

(43) Date of publication:
**19.11.2025 Bulletin 2025/47**

(21) Application number: **24176721.9**

(22) Date of filing: **17.05.2024**

(51) International Patent Classification (IPC):
**H02P 21/13** (2006.01)  **H02P 21/14** (2016.01)
**H02P 21/18** (2016.01)  **H02P 21/24** (2016.01)
**H02P 21/26** (2016.01)  **H02P 21/28** (2016.01)

(52) Cooperative Patent Classification (CPC):
**H02P 21/13; H02P 21/141; H02P 21/18;**
**H02P 21/24; H02P 21/26; H02P 21/28;**
H02P 2207/01

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
• **Heikkilä, Samuli**
  **00380 Helsinki (FI)**
• **Kuunsäde, Sina**
  **00380 Helsinki (FI)**
• **Känsäkangas, Tero**
  **65320 Vaasa (FI)**
• **Danci, Alex**
  **65320 Vaasa (FI)**

(74) Representative: **Kolster Oy Ab**
**Salmisaarenaukio 1**
**P.O. Box 204**
**00181 Helsinki (FI)**

Remarks:
Amended claims in accordance with Rule 137(2)
EPC.

(54) **ARRANGEMENT AND METHOD FOR CONTROLLING AN ASYNCHRONOUS MOTOR AND A FREQUENCY CONVERTER**

(57)    The present invention relates to the field of electric drive devices and electric motors for industrial applications, and more particularly to an arrangement and a method for controlling an asynchronous motor and a frequency converter. The arrangement of the present invention for controlling an asynchronous motor (3) comprises an inverter unit (2) arranged to drive said asynchronous motor (3); a flux sensor unit (4) comprising polyphase flux sensor/sensors placed in the airgap of said asynchronous motor (3) arranged to measure the polyphase airgap flux $\psi_{ag,a}$, $\psi_{ag,b}$, ... $\psi_{ag,m}$ of the asynchronous motor (3); a flux observer (5); and polyphase current sensors (31); wherein said flux observer (5) is arranged to calculate a flux estimate $\hat{\psi}$ utilizing a received airgap flux $\overline{\psi}_{ag}^{s}$ vector signal in a $\alpha\beta$-reference frame, a received stator current $\overline{i}^{s}_{s}$ vector signal in a $\alpha\beta$-reference frame, a received stator current $\overline{i}_{s}$ vector signal in a dq-reference frame and either one of a received/calculated stator voltage reference or a received stator voltage $\overline{u}^{s}_{s}$ vector signal in a $\alpha\beta$-reference frame, and wherein said flux observer (5) is used in control of said asynchronous motor (3).

Fig. 5

**Description**

**FIELD OF THE INVENTION**

The present invention relates to the field of electric drive devices and electric motors for industrial applications, and more particularly to an arrangement and a method for controlling an asynchronous motor and a frequency converter.

**BACKGROUND OF THE INVENTION**

Electric drives are widely used for industrial applications, e.g. for providing and controlling electrical power and energy to various public and industrial applications as well as for driving and controlling various public and industrial applications. Electric drives are used in industry for different applications, such as for driving motors within the transportation industry, for driving different devices within the process and manufacturing industry as well as within the energy industry.

Rotating electrical machines are typically controlled using a frequency converter, and for the controlled operation information regarding electrical behaviour of the machine is required. Such information is fed to the controller of the frequency converter in form of electrical parameters of the machine.

Speed sensorless asynchronous motors may have an unstable operating region at low speeds. Also variations of the stator resistance due to the temperature may cause stability problems at low speeds.

In prior art solutions for controlling an asynchronous motor, the main problems are the quality of the control as well as the stability of the control.

Within the technology, there is a specific need for an improved arrangement and a method for controlling an asynchronous motor that would be more stable and reliable compared to the current prior art solutions.

**BRIEF DESCRIPTION OF THE INVENTION**

The object of the invention is to introduce an improved arrangement and an improved method for controlling an asynchronous motor that would be more stable and reliable compared to the current prior art solutions. Advantageous embodiments are furthermore presented.

It is brought forward a new arrangement for controlling an asynchronous motor, said arrangement comprising: an inverter unit arranged to drive said asynchronous motor; a flux sensor unit comprising polyphase flux sensor/sensors placed in the airgap of said asynchronous motor arranged to measure the polyphase airgap flux $\psi_{ag,a}$, $\psi_{ag,b}$, ... $\psi_{ag,m}$ of the asynchronous motor; a flux observer; and polyphase current sensor/sensors arranged to measure polyphase stator current $i_a$, $i_b$, ... $i_n$ of said asynchronous motor, wherein said flux observer is arranged to receive an airgap flux $\overline{\psi}_{ag}^{\,s}$ vector signal in a $\alpha\beta$-reference frame from said flux sensor unit via a first abc/$\alpha\beta$-converter, to receive a stator current $\overline{i}^s_{\,s}$ vector signal in a $\alpha\beta$-reference frame from said polyphase current sensor/sensors via a second abc/$\alpha\beta$-converter, to receive a stator current $\overline{i}_s$ vector signal in a dq-reference frame from a $\alpha\beta$/dq-converter, and either to receive/calculate a stator voltage reference or to receive a stator voltage $\overline{u}^s_{\,s}$ vector signal in a $\alpha\beta$-reference frame from polyphase voltage sensor/sensors via a third abc/$\alpha\beta$-converter, said polyphase voltage sensor/sensors arranged to measure polyphase stator voltage $u_a$, $u_b$, ... $u_n$ of said asynchronous motor, to calculate a flux estimate $\hat{\psi}$ utilizing said airgap flux $\overline{\psi}_{ag}^{\,s}$ vector signal in a $\alpha\beta$-reference frame, said stator current $\overline{i}^s_{\,s}$ vector signal in a $\alpha\beta$-reference frame, said stator current $\overline{i}_s$ vector signal in a dq-reference frame and either one of said received/calculated stator voltage reference or said stator voltage $\overline{u}^s_{\,s}$ vector signal in a $\alpha\beta$-reference frame, and wherein said flux observer is used in control of said asynchronous motor.

In a preferred embodiment, said flux observer is arranged to to calculate a motor angular speed estimate $\hat{\omega}_m$ utilizing one or more of said airgap flux $\overline{\psi}_{ag}^{\,s}$ vector signal in a $\alpha\beta$-reference frame, said converted stator current $\overline{i}^s_{\,s}$ vector signal in a $\alpha\beta$-reference frame, said stator current $\overline{i}_s$ vector signal in a dq-reference frame and either one of said received/calculated stator voltage reference or said stator voltage $\overline{u}^s_{\,s}$ vector signal in a $\alpha\beta$-reference frame, and wherein said calculated flux estimate $\hat{\psi}$ and said calculated motor angular speed estimate $\hat{\omega}_m$ being used in establishing a stator voltage reference $\overline{u}^s_{s,ref}$ vector signal in a $\alpha\beta$-reference frame, said stator voltage reference $\overline{u}^s_{s,ref}$ vector signal in a αβ-reference frame being used in control of said asynchronous motor.

In a preferred embodiment, said arrangement comprises polyphase voltage sensor/sensors arranged to measure polyphase stator voltage $u_a$, $u_b$, ... $u_n$ of said asynchronous motor, and wherein said flux observer is arranged to $\overline{u}{}^s_s$ vector signal in a αβ-reference frame from said polyphase voltage sensor/sensors via a third abc/αβ-converter and to utilize said received stator voltage $\overline{u}{}^s_s$ vector signal in calculating said flux estimate $\hat{\psi}$ and/or said motor angular speed estimate $\hat{\omega}_m$.

In a preferred embodiment, said arrangement comprises a current controller arranged to receive/calculate a stator voltage reference $\overline{u}_{s,ref}$ vector signal in a dq-reference frame and forward said stator voltage reference $\overline{u}_{s,ref}$ vector signal in a dq-reference frame to said flux observer, and wherein said flux observer is arranged to utilize said calculated stator voltage reference $\overline{u}_{s,ref}$ vector signal in a dq-reference frame in calculating said flux estimate $\hat{\psi}$ and/or said motor angular speed estimate $\hat{\omega}_m$.

In a preferred embodiment, said arrangement comprises a current controller, a αβ/dq-converter and a dq/αβ-converter, wherein said αβ/dq-converter is arranged to receive a stator current $\overline{i}{}^s_s$ vector signal in a αβ-reference frame from said polyphase current sensor/sensors via a second abc/αβ-converter, to convert the stator current $\overline{i}{}^s_s$ vector signal in a αβ-reference frame to a stator current $\overline{i}_s$ vector signal in a dq-reference frame, and to forward said converted stator current $\overline{i}_s$ vector signal to the current controller, wherein said current controller is arranged to calculate a stator voltage reference $\overline{u}_{s,ref}$ vector signal in a dq-reference frame utilizing said converted stator current $\overline{i}_s$ vector signal in a dq-reference frame, an $i_d$ current reference value $i_{d,ref}$ and an $i_q$ current reference value $i_{q,ref}$, and wherein said dq/αβ-converter is arranged to receive the calculated stator voltage reference $\overline{u}_{s,ref}$ vector signal in a dq-reference frame from said current controller, to convert the stator voltage reference $\overline{u}_{s,ref}$ vector signal in a dq-reference frame to a stator voltage reference $\overline{u}{}^s_{s,ref}$ vector signal in a αβ-reference frame, and to forward said converted stator voltage reference $\overline{u}{}^s_{s,ref}$ vector signal used for control of said asynchronous motor.

In a preferred embodiment, said arrangement comprises a flux controller, wherein said flux controller is arranged to receive a flux reference $\psi_{ref}$ as an input value, to receive the flux estimate $\hat{\psi}$ from said flux observer, to calculate an $i_d$ current reference value $i_{d,ref}$ utilizing said flux reference $\psi_{ref}$ and said flux estimate $\hat{\psi}$, and to forward said calculated $i_d$ current reference value $i_{d,ref}$ to said current controller.

In a preferred embodiment, said arrangement further comprises a speed controller and a torque gain unit, wherein said speed controller is arranged to receive a motor angular speed reference $\omega_{m,ref}$ as an input value, to receive the motor angular speed estimate $\hat{\omega}_m$ from said flux observer, to calculate a torque reference value $T_{ref}$ utilizing said motor angular speed reference $\omega_{m,ref}$ and said motor angular speed estimate $\hat{\omega}_m$, and to forward said calculated torque reference value $T_{ref}$ to said torque gain unit, and wherein said torque gain unit is arranged to receive the calculated torque reference value $T_{ref}$ from said flux observer, to calculate an $i_q$ current reference value $i_{q,ref}$ utilizing said calculated torque reference value $T_{ref}$, and to forward said calculated $i_q$ current reference value $i_{q,ref}$ to said current controller.

In a preferred embodiment of said arrangement, said polyphase flux sensor/sensors of said flux sensor unit comprise two or more hall effect sensors.

In a preferred embodiment of said arrangement, said arrangement further comprises one or more planar energy harvester coil/coils arranged to provide power to said two or more hall effect sensors.

In a preferred embodiment, said polyphase flux sensor/sensors of said flux sensor unit comprise two or more planar energy harvester coils arranged to measure the polyphase airgap flux $\psi_{ag,a}$, $\psi_{ag,b}$, ... $\psi_{ag,m}$ of the asynchronous motor.

In a preferred embodiment, said current controller, said αβ/dq-converter, said dq/αβ-converter, said flux controller, said speed controller and said torque gain unit are realized in a frequency converter.

In a preferred embodiment, said arrangement comprises a speed sensor unit placed in said asynchronous motor arranged to measure the angular speed $\omega_m$ of the asynchronous motor.

Furthermore, it is brought forward a new method for controlling an asynchronous motor, in which method: polyphase airgap flux $\psi_{ag,a}$, $\psi_{ag,b}$, ... $\psi_{ag,m}$ of the asynchronous motor is measured by a flux sensor unit comprising polyphase flux sensor/sensors placed in the airgap of said asynchronous motor; polyphase stator current $i_a$, $i_b$, ... $i_n$ of said asynchronous motor is measured by polyphase current sensor/sensors; an airgap flux $\overline{\psi}{}^s_{ag}$ vector signal in a αβ-reference frame, a converted stator current $\overline{i}{}^s_s$ vector signal in a αβ-reference frame, a stator current $\overline{i}_s$ vector signal in a dq-reference frame and either one of a received/calculated stator voltage reference or a stator voltage $\overline{u}{}^s_s$ vector signal in a αβ-reference frame are received by a flux observer as input values; a flux estimate $\hat{\psi}$ is calculated by said flux observer utilizing said airgap flux $\overline{\psi}{}^s_{ag}$ vector signal in a αβ-reference frame, said converted stator current $\overline{i}{}^s_s$ vector signal in a αβ-reference frame, said stator current $\overline{i}_s$ vector signal in a dq-reference frame and either one of said received/calculated stator voltage reference or said stator voltage $\overline{u}^s{}_s$ vector signal in a αβ-reference frame; and said flux observer is used in controlling said asynchronous motor.

In a preferred embodiment of said method, stator current $\overline{i}^s{}_s$ vector signal in a αβ-reference frame of said measured stator current $i_a$, $i_b$, ... $i_n$ is received by a αβ/dq-converter from said polyphase current sensor/sensors via a second abc/αβ-converter, and converted to a stator current $\overline{i}_s$ vector signal in a dq-reference frame, and forwarded to a current controller; stator voltage reference $\overline{u}_{s,ref}$ vector signal in a dq-reference frame is calculated by said current controller utilizing said converted stator current $\overline{i}_s$ vector signal in a dq-reference frame, an $i_d$ current reference value $i_{d,ref}$ and an $i_q$ current reference value $i_{q,ref}$, and stator voltage reference $\overline{u}_{s,ref}$ vector signal in a dq-reference frame is converted to a to a stator voltage reference $\overline{u}^s_{s,ref}$ vector signal in a αβ-reference frame by a dq/αβ-converter and said converted stator voltage reference $\overline{u}^s_{s,ref}$ vector signal is forwarded for being used in control of said asynchronous motor.

Furthermore, it is brought forward a new frequency converter comprising an inverter unit arranged to drive an asynchronous motor; and a flux observer, wherein said flux observer is arranged to receive: an airgap flux $\overline{\psi}^s_{ag}$ vector signal in a αβ-reference frame from a flux sensor unit via a first abc/αβ-converter, to receive a stator current $\overline{i}^s{}_s$ vector signal in a αβ-reference frame from said polyphase current sensor/sensors via a second abc/αβ-converter, to receive a stator current $\overline{i}_s$ vector signal in a dq-reference frame from a αβ/dq-converter, and either to receive/calculate a stator voltage reference or to receive a stator voltage $\overline{u}^s{}_s$ vector signal in a αβ-reference frame from polyphase voltage sensor/sensors via a third abc/αβ-converter, said polyphase voltage sensor/sensors arranged to measure polyphase stator voltage $u_a$, $u_b$, ... $u_n$ of said asynchronous motor, to calculate a flux estimate $\hat{\psi}$ utilizing said airgap flux $\overline{\psi}^s_{ag}$ vector signal in a αβ-reference frame, said converted stator current $\overline{i}^s{}_s$ vector signal in a αβ-reference frame, said stator current $\overline{i}_s$ vector signal in a dq-reference frame and either one of said received/calculated stator voltage reference or said stator voltage $\overline{u}^s{}_s$ vector signal in a αβ-reference frame, and wherein said flux observer is used in control of said asynchronous motor.

BRIEF DESCRIPTION OF THE DRAWINGS

In the following, the present invention will be described in more detail by way of example and with reference to the attached drawings, in which:

Figure 1 illustrates an induction motor equivalent circuit T-model in an alpha-beta stator reference frame.

Figure 2 illustrates an induction motor equivalent circuit inverse-gamma-model in an alpha-beta stator reference frame.

Figure 3 illustrates an embodiment of an example simple phase-lock loop used in a flux observer for the calculation of estimates.

Figure 4 illustrates an embodiment of an arrangement for controlling an asynchronous motor according to the present invention.

Figure 5 illustrates another embodiment of an arrangement for controlling an asynchronous motor according to the present invention.

Figure 6 illustrates a third embodiment of an arrangement for controlling an asynchronous motor according to the present invention.

Figure 7 illustrates a fourth embodiment of an arrangement for controlling an asynchronous motor according to the present invention.

Figure 8 illustrates an embodiment of a method for controlling an asynchronous motor according to the present invention.

The foregoing aspects, features and advantages of the invention will be apparent from the drawings and the detailed description related thereto.

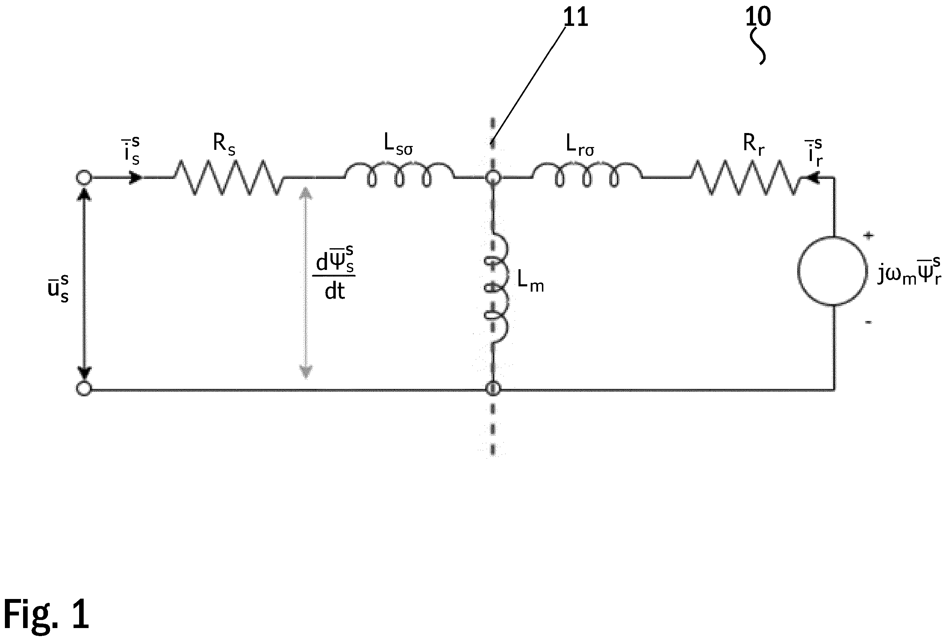

In the following, the invention will be described in greater detail by means of preferred embodiments with reference to the accompanying drawings of Figures 1 to 8.

DETAILED DESCRIPTION

The arrangement according to the present invention for controlling an asynchronous motor comprises: an inverter unit arranged to drive said asynchronous motor; a flux sensor unit comprising polyphase flux sensor/sensors placed in the airgap of said asynchronous motor arranged to measure the polyphase airgap flux $\psi_{ag,a}$, $\psi_{ag,b}$, ... $\psi_{ag,m}$ of the asynchronous motor; a flux observer; and polyphase current sensor/sensors arranged to measure polyphase stator current $i_a$, $i_b$, ... $i_n$ of said asynchronous motor, wherein said flux observer is arranged to receive an airgap flux $\overline{\psi}_{ag}^{\,s}$ vector signal in a $\alpha\beta$-reference frame from said flux sensor unit via a first abc/$\alpha\beta$-converter, to receive a stator current $\overline{i^s}_s$ vector signal in a $\alpha\beta$-reference frame from said polyphase current sensor/sensors via a second abc/$\alpha\beta$-converter, to receive a stator current $\overline{i}_s$ vector signal in a dq-reference frame from a $\alpha\beta$/dq-converter, and either to receive/calculate a stator voltage reference or to receive a stator voltage $\overline{u}^s_s$ vector signal in a $\alpha\beta$-reference frame from polyphase voltage sensor/sensors via a third abc/$\alpha\beta$-converter, said polyphase voltage sensor/sensors arranged to measure polyphase stator voltage $u_a$, $u_b$, ... $u_n$ of said asynchronous motor, to calculate a flux estimate $\hat{\psi}$ utilizing said airgap flux $\overline{\psi}_{ag}^{\,s}$ vector signal in a $\alpha\beta$-reference frame, said stator current $\overline{i^s}_s$ vector signal in a $\alpha\beta$-reference frame, said stator current $\overline{i}_s$ vector signal in a dq-reference frame and either one of said received/calculated stator voltage reference or said stator voltage $\overline{u}^s_s$ vector signal in a $\alpha\beta$-reference frame, and wherein said flux observer is used in control of said asynchronous motor.

When referring to the term "polyphase", i.e. to the terms "polyphase airgap flux", "polyphase stator current", "polyphase current", "polyphase stator voltage", "polyphase voltage", in this application, it is meant to refer to respective terms in any phase count asynchronous motors, this comprising three-phase asynchronous motors and six-phase asynchronous motors among others.

There are multiple different ways of measuring airgap flux. One solution for measuring airgap flux of an asynchronous motor is utilizing a planar energy harvester coil. A planar energy harvester coil can be manufactured as a flexible printed circuit (FPC). This type of planar energy harvester coil can be placed in the airgap of an asynchronous motor between the stator and the rotor. According to Faraday's law any change in the magnetic field around a coil will induce a voltage into the coil. The induced voltage can be derived from Equation 1 as:

$$u_{ind} = -N \frac{d\psi}{dt} = -NA \frac{dB}{dt} \tag{1}$$

where N is the coil turns number, A is area enclosed by the coil, $\psi$ is air gap flux, and B is airgap flux density. The flux linkage can be derived from Equation 2 by integrating the induced voltage as:

$$\psi_{ind} = -\frac{1}{N} \int u_{ind} \cdot dt \tag{2}$$

Laboratory measurements have showed that a planar energy harvester coil can measure the induced voltage in the airgap with a wide spectrum. A planar energy harvester coil is cost-efficient, safe, and reliable power source that can be utilized by add-on motor electronics as well as by embedded motor electronics.

However, one practical problem with using a planar energy harvester coil is the zero-speed operation. If there would be any offset error in the measurement, the error will be accumulated in time by integration in accordance with the Equation 2. This will lead to gradual drifting of the flux. Additionally, according to the Equation 1, at standstill harvester coil cannot measure any voltage, thus the integrator output will be zero. To overcome these problems, a Hall effect sensor can be used.

The planar energy harvester coil can be equipped or replaced with a miniature hall effect sensor. Hall effect sensors usually output the flux density. Therefore, the airgap flux quantity can be obtained from Equation 3 as:

$$\psi = BA \tag{3}$$

where A is the effective area of the sensor. As a result, the integration drift problem will be disappeared. Additionally, the DC component of the flux can be accurately measured in standstill.

The modern miniature hall effect sensors are very energy efficient and may only require from $\mu$A to a few of mA current. An AC/DC converter circuit can convert the AC power harvested by an electromagnetic harvester coil to be used by a hall effect sensor. Even in the zero-speed operation, due to the presence of the modulation ripple in flux, voltage will be induced to the coils of the hall effect sensor. This voltage can be utilized as a power source for the hall effect sensor. Alternatively, or in the case where there is no harvester coil, a small battery can be used as an external power source of the hall effect sensor.

Figure 1 illustrates an induction motor equivalent circuit T-model 10 in an alpha-beta stator reference frame. In the equivalent circuit T-model 10 of Figure 1 the airgap flux is represented along a dashed line 11.

The stator flux $\overline{\psi}_s$ can be derived from the airgap flux $\overline{\psi}_{ag}$ of Figure 1. The airgap flux $\overline{\psi}_{ag}$ of a three-phase asynchronous motor can be acquired in accordance with the procedure described in the following. First the three-phase airgap voltage vector $\overline{u}_{ag,abc}$ is measured. The measured the three-phase airgap voltage vector $\overline{u}_{ag,abc}$ is then utilized in the space-vector transformation (abc/αβ) shown in Equation 4 as:

$$\overline{u}_{ag} = \frac{2}{3}\left(u_{ag,a} + u_{ag,b}e^{\frac{j2\pi}{3}} + u_{ag,c}e^{\frac{j4\pi}{3}}\right) \tag{4}$$

Consequently, the airgap flux $\overline{\psi}_{ag}$ is acquired from Equation 5 as:

$$\overline{\psi}_{ag} = \int \overline{u}_{ag} \cdot dt \tag{5}$$

Alternatively, when utilizing a hall effect sensor the airgap flux density of each phase is first measured, and the measured airgap flux $\overline{\psi}^s{}_{ag}$ is calculated from Equation 6 as:

$$\overline{\psi}^s{}_{ag} = \frac{2}{3}(\psi_{ag,a} + \psi_{ag,b}e^{\frac{j2\pi}{3}} + \psi_{ag,c}e^{\frac{j4\pi}{3}}) \tag{6}$$

Consequently, after establishing the airgap flux $\overline{\psi}^s{}_{ag}$ the stator flux $\overline{\psi}^s{}_s$ can be derived from the airgap flux $\overline{\psi}^s{}_{ag}$.

In an embodiment with a polyphase asynchronous motor, the electrical angle $\theta_e$ between the hall sensors can be calculated as $\theta_e = 360°/n$, where $n$ is the number of phases. The number of flux sensors m could be as m = $n$, or m = $n$-1. Respectively, the mechanical angle $\theta_M$ between the adjacent hall sensors can be calculated as $\theta_M = \theta_e/p$, where $p$ is the number of pole pairs.

In an exemplary embodiment with a three-phase asynchronous motor having six poles distributed around the stator, the electrical angle $\theta_e$ between the hall sensors can be calculated as $\theta_e = 360°/3 = 120°$, where $n$ = 3 being the number of phases. Respectively, the mechanical angle $\theta_M$ between the adjacent hall sensors positioned around the circumference of the stator can be calculated as $\theta_M = 120°/3 = 40°$, where $p$ = 3 being the number of pole pairs.

In another exemplary embodiment with a six-phase asynchronous motor having four poles distributed around the stator, the electrical angle $\theta_e$ between the hall sensors can be calculated as $\theta_e = 360°/6 = 60°$, where $n$ = 6 being the number of phases. Respectively, the mechanical angle $\theta_M$ between the adjacent hall sensors positioned around the circumference of the stator can be calculated as $\theta_M = 60°/2 = 30°$, where $p$ = 2 being the number of pole pairs.

In yet another further exemplary embodiment the number of flux sensors m could also be selected as m = 2, or m = 3, regardless of the number of phases. Therefore, for calculation of the airgap flux vector, Equation 6 will suffice regardless of the number of phases.

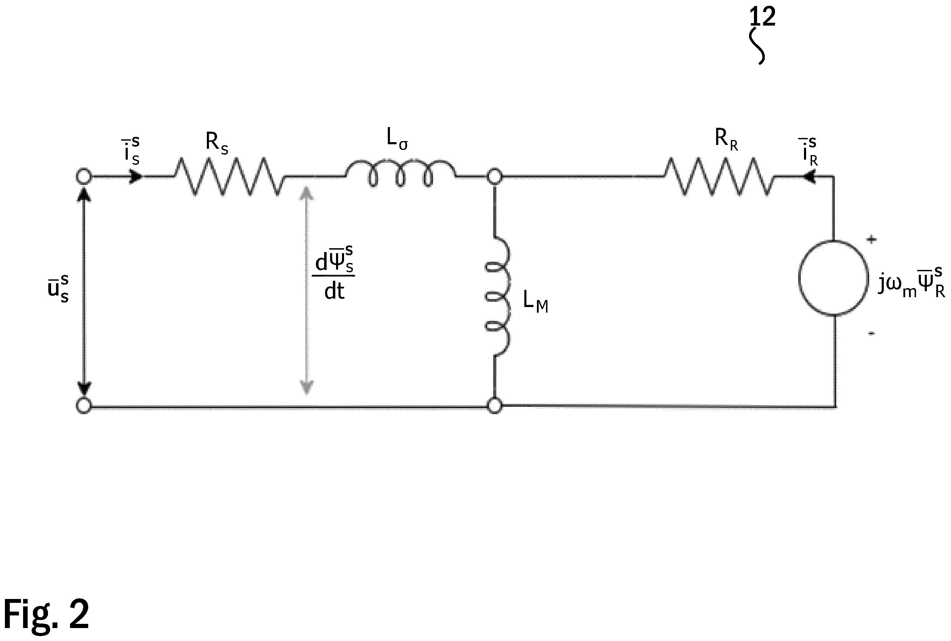

Figure 2 illustrates an induction motor equivalent circuit inverse-gamma-model 12 in an alpha-beta stator reference frame. The vector-oriented control is usually based on the inverse-gamma-model 12. It can be seen from Figure 1 and Figure 2 that the stator flux $\overline{\psi}^s{}_s$ is the same quantity in both models. Consequently, the stator flux $\overline{\psi}^s{}_s$ can be derived from the airgap flux $\overline{\psi}^s{}_{ag}$ of Figure 1 and be used in the inverse-gamma-model 12 of Figure 2 if the stator leakage inductance $L_{s\sigma}$ is known.

Assuming the stator and rotor leakage inductances to be equal, i.e. $L_{s\sigma} = L_{r\sigma}$, and for obtaining the stator leakage inductance $L_{s\sigma}$ a transformation coefficient $\gamma$ can be derived from Equation 7 as:

$$\gamma = \frac{L_M}{0.5\,L_\sigma + L_M} \tag{7}$$

In Equation 7, $L_M$ is the magnetizing inductance and $L_\sigma$ is the leakage inductance of the inverse-gamma-model 12. These inductances are estimated during the identification run of the asynchronous motor. Respectively, the stator rotor leakage inductance $L_{s\sigma}$ and the rotor leakage inductance $L_{r\sigma}$ are obtained as presented in Equation 8:

$$L_{s\sigma} = L_{r\sigma} = \frac{L_\sigma}{1+\gamma} \tag{8}$$

It can be shown that the Equation 8 is robust against errors in the magnetizing inductance $L_M$ and can therefore be presented as in Equation 9:

$$L_{s\sigma} = L_{r\sigma} = \frac{L_\sigma}{2} + \frac{L_\sigma^2}{2(4L_M + L_\sigma)} \tag{9}$$

In Equation 9, the magnetizing inductance $L_M$ appears in the denominator of the second term. Typically, in induction motors, $L_M \gg L_\sigma$, so the second term in Equation 9 will be very small. Consequently, the variations in the magnetizing inductance $L_M$ will have a negligible effect on the accuracy of the stator leakage inductance $L_{s\sigma}$. Even though the magnetizing inductance $L_M$ has a negligible effect on calculating the stator leakage inductance $L_{s\sigma}$ as shown in Equation 9, the assumption that the stator and rotor leakage inductances are equal, i.e. $L_{s\sigma} = L_{r\sigma}$, is not always correct in practice and can introduce further error in obtaining the stator leakage inductance $L_{s\sigma}$. To overcome the inaccuracies and to remove the dependency on the magnetizing inductance $L_M$, an estimate for the stator leakage inductance $\hat{L}_{s\sigma}$ can be identified during the identification run of the asynchronous motor using the measured airgap flux $\overline{\psi}^s_{ag}$.

Consequently, the stator flux $\overline{\psi}^s_s$ of the inverse-gamma-model 12 is then derived from the measured airgap flux $\overline{\psi}^s_{ag}$ and stator current $\overline{i}^s_s$ as presented in Equation 10:

$$\overline{\psi}^s_{\ s} = \overline{\psi}^s_{\ ag} + \hat{L}_{s\sigma}\overline{i}^s_{\ s} \tag{10}$$

In accordance with the present invention a flux observer can be utilized for stator flux estimation. The stator flux estimate $\widehat{\overline{\psi}}^s_{\ s}$ is obtained from Equation 11, where $\overline{u}^s_s$ is the stator voltage vector, $\hat{R}_s$ is the stator resistance estimate, and $\overline{u}_{corr}$ is the voltage correction vector, as:

$$\widehat{\overline{\psi}}^s_{\ s} = \int (\overline{u}^s_{\ s} - \hat{R}_s \overline{i}^s_{\ s} + \overline{u}_{corr})dt \tag{11}$$

The error between the stator flux estimate $\widehat{\overline{\psi}}^s_{\ s}$ and the measured stator flux $\overline{\psi}^s_s$ is an error vector $\overline{\varepsilon}$ obtained from Equation 12 as:

$$\overline{\varepsilon} = \widehat{\overline{\psi}}^s_{\ s} - \overline{\psi}^s_{\ s}$$

$$\tag{12}$$

The correction vector $\overline{u}_{corr}$ is then defined in the stator reference frame as a function of the error vector $\overline{\varepsilon}$ as presented in Equation 13:

$$\overline{u}_{corr} = u_{s\alpha,corr} + j u_{s\beta,corr} = f(\overline{\varepsilon}) \tag{13}$$

The rotor flux estimate can be obtained from Equation 14 as:

$$\widehat{\overline{\psi}}{}^{s}_{R} = \widehat{\overline{\psi}}{}^{s}_{s} - \hat{L}_{\sigma}\bar{i}^{s}_{s} \tag{14}$$

The rotor flux angle estimate $\hat{\theta}_s$ can be obtained from Equation 15 as:

$$\hat{\theta}_s = atan2(\hat{\psi}_{R\beta}, \hat{\psi}_{R\alpha}) \tag{15}$$

The rotor angular speed estimate $\hat{\omega}_s$ can be obtained from Equation 16 as:

$$\hat{\omega}_s = \frac{d\hat{\theta}_s}{dt} \tag{16}$$

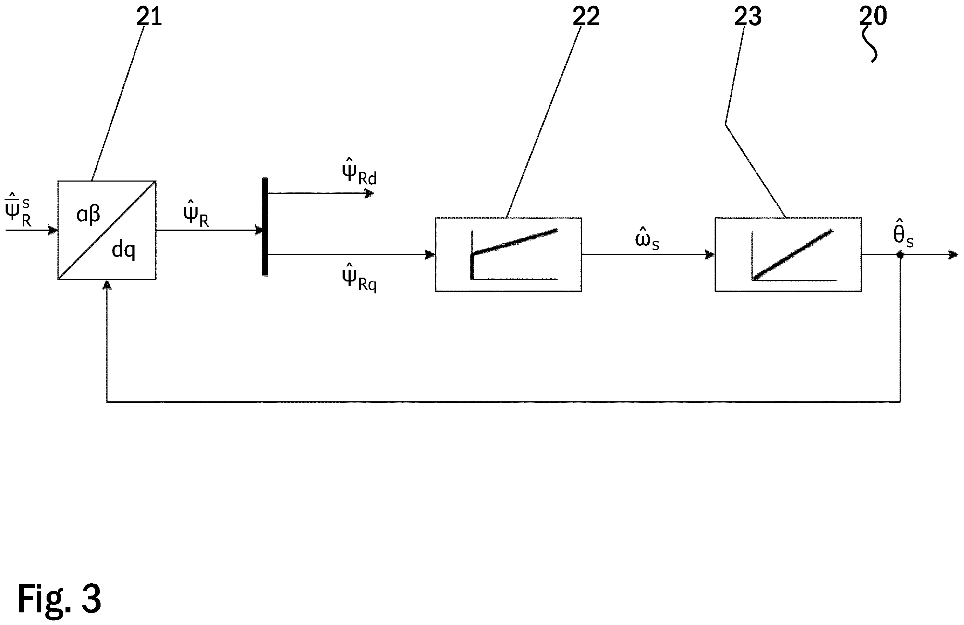

Figure 3 illustrates an embodiment of an example simple phase-lock loop used in a flux observer for the calculation of estimates. In an alternative embodiment, a PLL algorithm (PLL, phase-locked loop) may be used in a phase-lock loop 20 to obtain the rotor flux angle estimate $\hat{\theta}_s$ and the rotor angular speed estimate $\hat{\omega}_s$. The PLL algorithm gives a smoother result as compared to the calculations using *atan*2 function (Equations 15 and 16). The phase-lock loop 20 according to the presented embodiment comprises an αβ/dq-converter 21, a PI controller 22 (PI, Proportional Integral) and an integrator 23.

In the presented embodiment, the rotor flux estimate $\widehat{\overline{\psi}}{}^{s}_{R}$ is first brought to the αβ/dq-converter 21. Said αβ/dq-converter 21 receives the rotor flux estimate $\widehat{\overline{\psi}}{}^{s}_{R}$, and converts/transforms said rotor flux estimate $\widehat{\overline{\psi}}{}^{s}_{R}$ in a αβ-reference frame to a rotor flux $\hat{\psi}_R$ signal in a dq-reference frame, i.e. in rotor coordinates. The converted/transformed rotor flux $\hat{\psi}_R$ signal comprises both the rotor flux d-axis component $\hat{\psi}_{Rd}$ and the rotor flux q-axis component $\hat{\psi}_{Rq}$, of which the rotor flux q-axis component $\hat{\psi}_{Rq}$ is forwarded to the PI controller 22. Said PI controller 22 estimates the rotor angular speed estimate $\hat{\omega}_s$ and forwards said estimated rotor angular speed estimate $\hat{\omega}_s$ to an integrator 23. The integrator 23 then estimates the rotor flux angle estimate $\hat{\theta}_s$ as an output of the PLL algorithm. The estimated rotor flux angle estimate $\hat{\theta}_s$ is then looped to the αβ/dq-converter 21 at the input of the phase-locked loop.

In the presented embodiment of Figure 3, the PLL algorithm estimates the rotor flux angle estimate $\hat{\theta}_s$ by driving the error to the rotor flux q-axis component $\hat{\psi}_{Rq}$ zero. This will lead to

$$\hat{\theta}_s = \theta_s \tag{17}$$

and to

$$\hat{\psi}_{Rd} = \hat{\psi}_R \tag{18}$$

The above illustrated embodiment of Figure 3 is illustrated as a simple example. In practise there can be more filtering used in the phase-lock loop.

In accordance with the presented embodiment of Figure 3, the rotor flux amplitude estimate $\hat{\psi}_R$ and the stator flux amplitude estimate $\hat{\psi}_s$ are estimated in a flux observer as:

$$\hat{\psi}_R = \sqrt{\hat{\psi}^2{}_{R\alpha} + \hat{\psi}^2{}_{R\beta}} \tag{19}$$

and as:

$$\hat{\psi}_s = \sqrt{\hat{\psi}^2{}_{s\alpha} + \hat{\psi}^2{}_{s\beta}} \tag{20}$$

Furthermore, the slip frequency estimate $\hat{\omega}_r$ can be obtained from Equation 21 as:

$$\widehat{\omega}_r = \frac{\hat{R}_R i_q}{\hat{\psi}_R} \tag{21}$$

In accordance with the presented embodiment of Figure 3, the motor angular speed estimate $\hat{\omega}_m$ is obtained in a flux observer from equation 22 as:

$$\widehat{\omega}_m = \widehat{\omega}_s - \widehat{\omega}_r = \widehat{\omega}_s - \frac{\hat{R}_R i_q}{\hat{\psi}_R} \tag{22}$$

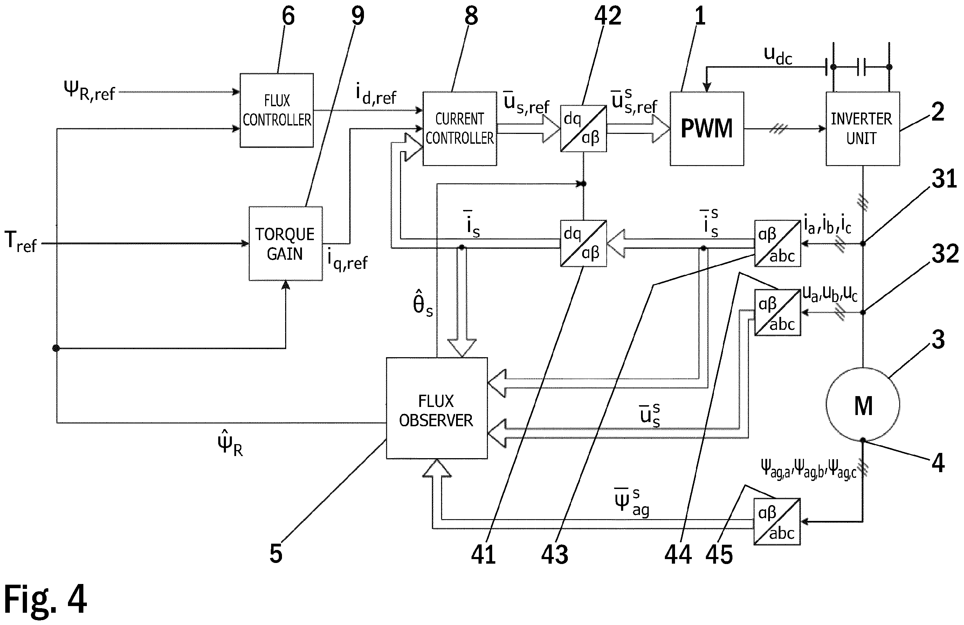

Figure 4 illustrates an embodiment of an arrangement for controlling an asynchronous motor according to the present invention. In the presented embodiment an arrangement for controlling a three-phase asynchronous motor is illustrated. The arrangement according to the present embodiment comprises a PWM unit 1 (PWM, Pulse Width Modulator) and an inverter unit 2. Said arrangement is used for controlling an asynchronous motor 3. The PWM unit 1 of the presented embodiment is only example of a control unit for providing control instruction, i.e. switching instruction to the inverter unit 2. There are several other control/modulation techniques equally suited for providing switching instruction to the inverter unit 2. As an example, such control/modulation techniques would include direct torque control technique or vector modulation technique among others.

In the presented embodiment, the asynchronous motor 3 is driven by said inverter unit 2, which inverter unit 2 is controlled by said PWM unit 1. Said PWM unit 1 receives the measured input voltage $u_{dc}$ of said inverter unit 2 from a voltage sensor in the input of said inverter unit 2. Said PWM unit 1 and said inverter unit 2 may be realized in a frequency converter. The arrangement according to the present embodiment also comprises a flux sensor unit 4 and a flux observer 5. Said flux observer 5 may be realized in a frequency converter.

Said flux sensor unit 4 comprises three-phase flux sensor/sensors placed in the airgap of said asynchronous motor 3 arranged to measure the three-phase airgap flux $\psi_{ag,a}, \psi_{ag,b}, \psi_{ag,c}$ of the asynchronous motor 3. The three-phase airgap flux measurement of an asynchronous motor 3 can be arranged with two or three sensors. With three sensors each sensor is used to measure airgap flux aligned with each phase $\psi_{ag,a}, \psi_{ag,b}, \psi_{ag,c}$ of the asynchronous motor 3 separately. With two sensors the sensors are used to measure airgap flux aligned with two phases and the third phase is constructed using these two measurements. For example, first the airgap flux aligned with phase a and phase b are measured with two sensors $\psi_{ag,a}, \psi_{ag,b}$. As ideally the sum of the fluxes is zero $\psi_{ag,a} + \psi_{ag,b} + \psi_{ag,c} = 0$, the airgap flux aligned with c-phase can be constructed as $\psi_{ag,c} = -\psi_{ag,a} + \psi_{ag,b})$.

Said three-phase flux sensor/sensors of said flux sensor unit 4 may comprise two or more hall effect sensors. The arrangement according to the present embodiment may also comprise one or more planar energy harvester coil/coils arranged to provide power to said two or more hall effect sensors. Said three-phase flux sensor/sensors of said flux sensor unit 4 may also comprise two or more energy harvester coils arranged to measure the airgap flux $\psi_{ag,a}, \psi_{ag,b}, \psi_{ag,c}$ of the asynchronous motor 3.

Said three-phase flux sensor/sensors of said flux sensor unit 4 measure the three-phase airgap flux of said asynchronous motor 3 and provide a measured airgap flux $\psi_{ag,a}, \psi_{ag,b}, \psi_{ag,c}$ to said flux observer 5 via a first abc/$\alpha\beta$-converter 45. Said first abc/$\alpha\beta$-converter 45 receives the measured airgap flux $\psi_{ag,a}, \psi_{ag,b}, \psi_{ag,c}$ from said flux sensor unit 4, converts/transforms the measured airgap flux $\psi_{ag,a}, \psi_{ag,b}, \psi_{ag,c}$ in abc-reference frame to a measured airgap flux $\overline{\psi}^s_{ag}$ vector signal in a $\alpha\beta$-reference frame, i.e. in stationary space vector coordinates, and forwards said converted measured airgap flux $\overline{\psi}^s_{ag}$ vector signal in a $\alpha\beta$-reference frame to said flux observer 5.

Said flux observer 5 receives the measured airgap flux $\overline{\psi}^s_{ag}$ of the asynchronous motor 3 from said flux sensor unit 4. In another embodiment, said arrangement further comprises two or more planar energy harvester coils placed in the airgap of said asynchronous motor arranged to measure the airgap flux $\overline{\psi}^s_{ag}$ of the asynchronous motor.

The arrangement according to the present embodiment also comprises two or more current sensors 31 arranged in the three-phase motor input between said inverter unit 2 and said asynchronous motor 3. The three-phase current measurement of an asynchronous motor 3 is usually arranged with two or three sensors. With three sensors each sensor is used to measure each phase of the current $i_a, i_b, i_c$ of the asynchronous motor 3 separately. With two sensors the sensors are used to measure two phases of the current and the third phase is constructed using these two measurements. For example, first the currents of phase a and phase b are measured with two sensors $i_a, i_b$. As ideally the sum of the currents is zero $i_a + i_b + i_c = 0$, the c-phase current can be constructed as $i_c = \sim(i_a + i_b)$.

Said two or more current sensors 31 measure the three-phase stator current of said asynchronous motor 3 and provide a measured stator current $i_a, i_b, i_c$ to said flux observer 5 via a second abc/$\alpha\beta$-converter 43. Said second abc/$\alpha\beta$-converter 43 receives the measured stator current $i_a, i_b, i_c$ from said two or more current sensors 31, converts/transforms the measured stator current $i_a, i_b, i_c$ in abc-reference frame to a stator current $\overline{i}^s_s$ vector signal in a $\alpha\beta$-reference frame, i.e. in stationary space vector coordinates, and forwards said converted stator current $\overline{i}^s_s$ vector signal in a $\alpha\beta$-reference frame to said flux observer 5.

The arrangement according to the present embodiment also comprises two or more optional voltage sensors 32 arranged in the three-phase motor input between said inverter unit 2 and said asynchronous motor 3. Said two or more optional voltage sensors 32 are arranged to measure the three-phase stator voltage of said asynchronous motor 3 and provide a measured stator voltage $u_a$, $u_b$, $u_c$ to said flux observer 5 via a third abc/$\alpha\beta$-converter 44. Said third abc/$\alpha\beta$-converter 44 receives the measured stator voltage $u_a$, $u_b$, $u_c$ from said two or more voltage sensors 32, converts/transforms the measured stator voltage $u_a$, $u_b$, $u_c$ in abc-reference frame to a stator voltage $\overline{u}^s_s$ vector signal in a $\alpha\beta$-reference frame, i.e. in stationary space vector coordinates, and forwards said converted stator voltage $\overline{u}^s_s$ vector signal in a $\alpha\beta$-reference frame to said flux observer 5.

In the presented embodiment said said flux observer 5 receives the converted stator voltage $\overline{u}^s_s$ vector signal in a $\alpha\beta$-reference frame being converted from the measured stator voltage $u_a$, $u_b$, $u_c$. In an alternative embodiment, the stator voltage can be determined using the swich state information together with the measured DC voltage.

The arrangement according to the present embodiment also comprises an $\alpha\beta$/dq-converter 41. Said $\alpha\beta$/dq-converter 41 receives the measured stator current $\overline{i}^s_s$ vector signal from said second abc/$\alpha\beta$-converter 43, converts/transforms the stator current $\overline{i}^s_s$ vector signal in a $\alpha\beta$-reference frame, i.e. in stationary space vector coordinates, to a stator current $\overline{i}_s$ vector signal in a dq-reference frame, i.e. in rotor coordinates, and forwards said converted stator current $\overline{i}_s$ vector signal in a dq-reference frame to said flux observer 5.

Said flux observer 5 receives the measured stator current $\overline{i}^s_s$ vector signal from said two or more current sensors 31 via said second abc/$\alpha\beta$-converter 43 and the measured stator voltage $u_a$, $u_b$, $u_c$ from said two or more optional voltage sensors 32 via said third abc/$\alpha\beta$-converter 44. Said flux observer 5 also receives the converted stator current $\overline{i}_s$ vector signal in a dq-reference frame from said $\alpha\beta$/dq-converter 41.

In an alternative embodiment the stator voltage in a xy-reference frame can be calculated based on measured line-to-line voltages. Furthermore, in yet another alternative embodiment the stator voltage in a xy-reference frame can be calculated based on measured DC voltage and the output signals of said PWM unit 1.

In the arrangement according to the present embodiment said flux observer 5 calculates a flux amplitude estimate $\hat{\psi}$ utilizing said measured airgap flux $\overline{\psi}^s_{a,g}$ , said measured stator current $\overline{i}^s_s$ vector signal in a $\alpha\beta$-reference frame, said stator current $\overline{i}_s$ vector signal in a dq-reference frame and said measured stator voltage $u_a$, $u_b$, $u_c$. In the calculation of said flux amplitude estimate $\hat{\psi}$ said flux observer 5 utilizes Equations 6 to 16 and/or Equations 17 to 22.

Said flux observer 5 may calculate said flux amplitude estimate $\hat{\psi}$, e.g. the rotor flux amplitude estimate $\hat{\psi}_R$ in accordance with Equation 19 as:

$$\hat{\psi}_R = \sqrt{\hat{\psi}^2_{R\alpha} + \hat{\psi}^2_{R\beta}} \tag{19}$$

In the present embodiment said calculated flux amplitude estimate $ is a rotor flux amplitude estimate $\hat{\psi}_R$. In yet another embodiment said calculated flux amplitude estimate $\hat{\psi}$ may e.g. also be a stator flux amplitude estimate $\hat{\psi}_s$. In yet another embodiment both amplitude estimates, i.e. a rotor flux amplitude estimate $\hat{\psi}_R$ and a stator flux amplitude estimate $\hat{\psi}_s$, may be calculated as said calculated flux amplitude estimate $\hat{\psi}$. Said flux observer 5 may calculate said flux amplitude estimate $\hat{\psi}$, e.g. the stator flux amplitude estimate $\hat{\psi}_s$ in accordance with Equation 20 as:

$$\hat{\psi}_s = \sqrt{\hat{\psi}^2_{s\alpha} + \hat{\psi}^2_{s\beta}} \tag{20}$$

Said flux observer 5 forwards said calculated rotor flux amplitude estimate $\hat{\psi}_R$ for the calculation of a stator voltage reference $\overline{u}^s_{s,ref}$ vector signal in a $\alpha\beta$-reference frame, said calculated stator voltage reference $\overline{u}^s_{s,ref}$ vector signal being utilized in PWM unit 1 in controlling said asynchronous motor 3, i.e. in controlling said inverter unit 2 in driving said asynchronous motor 3.

The arrangement according to the present embodiment also comprises a flux controller 6, a current controller 8 and a torque gain unit 9. In the present embodiment said flux observer 5 is arranged to forward said rotor flux amplitude estimate $\hat{\psi}_R$ to said flux controller 6 and to said torque gain unit 9.

Said flux controller 6 receives a flux reference $\psi_{ref}$ as an input value. In the present embodiment said received flux reference $\psi_{ref}$ is a rotor flux reference $\psi_{R,ref}$. In yet another embodiment said received flux reference $\psi_{ref}$ may e.g. also be a stator flux reference $\psi_{s,ref}$. Said flux controller 6 also receives the rotor flux amplitude estimate $\hat{\psi}_R$ from said flux observer 5.

Said flux controller 6 calculates an $i_d$ current reference value $i_{d,ref}$ utilizing said rotor flux reference $\psi_{R,ref}$ and said rotor flux amplitude estimate $\hat{\psi}_R$. Said flux controller 6 is arranged to forward said calculated $i_d$ current reference value $i_{d,ref}$ to said current controller 8.

Said torque gain unit 9 receives a torque reference $T_{ref}$ as an input value. Said torque gain unit 9 also receives the rotor flux amplitude estimate $\hat{\psi}_R$ from said flux observer 5. Said torque gain unit 9 calculates an $i_q$ current reference value $i_{q,ref}$ utilizing said torque reference $T_{ref}$ in accordance with Equation 23 as:

$$i_{q,ref} = \left. T_{ref} \middle/ \hat{\psi}_R \right. \tag{23}$$

Said torque gain unit 9 is arranged to forward said calculated $i_q$ current reference value $i_{q,ref}$ to said current controller 8.

The arrangement according to the present embodiment also comprises an $\alpha\beta$/dq-converter 41 and a dq/$\alpha\beta$-converter 42.

In the arrangement according to the present embodiment said flux observer 5 calculates a rotor flux angle estimate $\hat{\theta}_s$ utilizing said measured stator current $i_a, i_b, i_c$. Said flux observer 5 is arranged to forward and forwards said calculated rotor flux angle estimate $\hat{\theta}_s$ to said $\alpha\beta$/dq-converter 41 and to said dq/$\alpha\beta$-converter 42.

Said $\alpha\beta$/dq-converter 41 receives the measured stator current $i_a, i_b, i_c$ from said two or more current sensors 31, converts/transforms the stator current $i_a, i_b, i_c$ in a $\alpha\beta$-reference frame, i.e. in stationary space vector coordinates, to a stator current $\bar{i}_s$ vector signal in a dq-reference frame, i.e. in rotor coordinates, and forwards said converted stator current $\bar{i}_s$ vector signal in a dq-reference frame to the current controller 8.

Said current controller 8 receives the converted stator current $\bar{i}_s$ vector signal in a dq-reference frame from said $\alpha\beta$/dq-converter 41, the calculated $i_d$ current reference value $i_{d,ref}$ from said flux controller 6 and the calculated $i_q$ current reference value $i_{q,ref}$ from said torque gain unit 9.

Said current controller 8 calculates a stator voltage reference $\bar{u}_{s,ref}$ vector signal in a dq-reference frame utilizing said converted stator current $\bar{i}_s$ vector signal in a dq-reference frame, said calculated $i_d$ current reference value $i_{d,ref}$ and said calculated $i_q$ current reference value $i_{q,ref}$. Said current controller 8 is arranged to forward said calculated stator voltage reference $\bar{u}_{s,ref}$ vector signal in a dq-reference frame to the PWM unit 1 via said dq/$\alpha\beta$-converter 42.

Said current controller 8 forwards said calculated stator voltage reference $\bar{u}_{s,ref}$ vector signal in a dq-reference frame to the dq/$\alpha\beta$-converter 42. Said dq/$\alpha\beta$-converter 42 receives the calculated stator voltage reference $\bar{u}_{s,ref}$ vector signal in a dq-reference frame from said current controller 8, converts/transforms the stator voltage reference $\bar{u}_{s,ref}$ vector signal in a dq-reference frame, i.e. in rotor coordinates, to a stator voltage reference $\bar{u}_{s,ref}^s$ vector signal in a $\alpha\beta$-reference frame, i.e. in stationary space vector coordinates, and forwards said converted stator voltage reference $\bar{u}_{s,ref}^s$ vector signal in a $\alpha\beta$-reference frame to the the PWM unit 1.

Said PWM unit 1 receives said converted stator voltage reference $\bar{u}_{s,ref}^s$ vector signal in a $\alpha\beta$-reference frame from said dq/$\alpha\beta$-converter 42. In accordance with the present invention said PWM unit 1 utilizes said stator voltage reference $\bar{u}_{s,ref}^s$ vector signal in controlling said asynchronous motor 3, i.e. in controlling said inverter unit 2 in driving said asynchronous motor 3.

In the presented embodiment of Figure 4 an arrangement for controlling a three-phase asynchronous motor is illustrated. In a similar fashion the arrangement for controlling a three-phase asynchronous motor may be used with any other multiphase asynchronous motors, this comprising six-phase asynchronous motors among others.

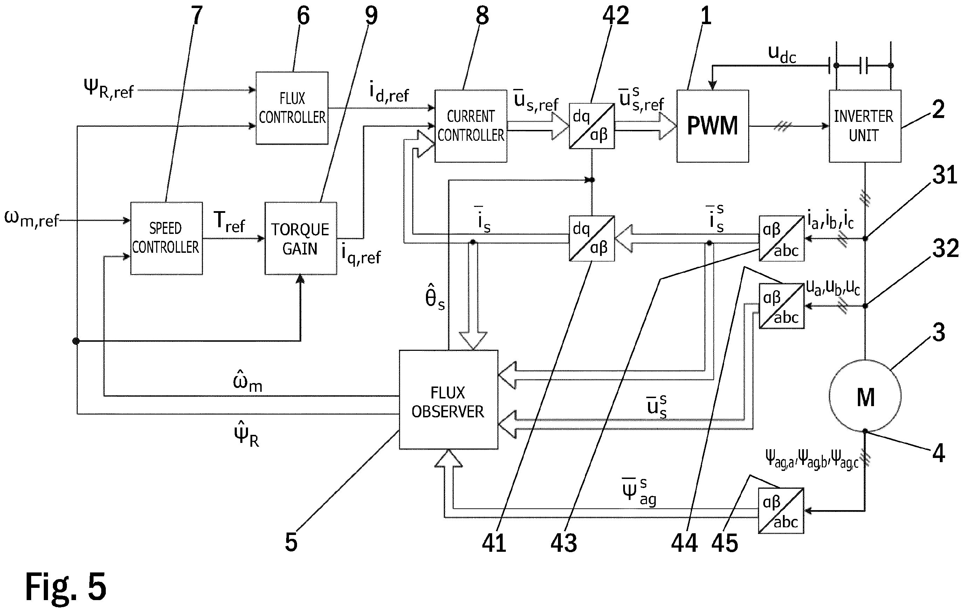

Figure 5 illustrates another embodiment of an arrangement for controlling an asynchronous motor according to the present invention. In the presented embodiment an arrangement for controlling a three-phase asynchronous motor is illustrated. The arrangement according to the present another embodiment comprises a PWM unit 1 (PWM, Pulse Width Modulator) and an inverter unit 2. Said arrangement is used for controlling an asynchronous motor 3. The PWM unit 1 of the presented embodiment is only example of a control unit for providing control instruction, i.e. switching instruction to the inverter unit 2. There are several other control/modulation techniques equally suited for providing switching instruction to the inverter unit 2. As an example, such control/modulation techniques would include direct torque control technique or vector modulation technique among others.

In the presented embodiment, the asynchronous motor 3 is driven by said inverter unit 2, which inverter unit 2 is controlled by said PWM unit 1. Said PWM unit 1 receives the measured input voltage $u_{dc}$ of said inverter unit 2 from a voltage sensor in the input of said inverter unit 2. Said PWM unit 1 and said inverter unit 2 may be realized in a frequency converter. The arrangement according to the present another embodiment also comprises a flux sensor unit 4 and a flux observer 5. Said flux observer 5 may be realized in a frequency converter.

Said flux sensor unit 4 comprises three-phase flux sensor/sensors placed in the airgap of said asynchronous motor 3 arranged to measure the three-phase airgap flux $\psi_{ag,a}$, $\psi_{ag,b}$, $\psi_{ag,c}$ of the asynchronous motor 3. Said three-phase flux sensor/sensors of said flux sensor unit 4 may comprise two or more hall effect sensors. The arrangement according to the present another embodiment may also comprise one or more planar energy harvester coil/coils arranged to provide power to said two or more hall effect sensors. Said three-phase flux sensor/sensors of said flux sensor unit 4 may also comprise two or more optional energy harvester coils arranged to measure the airgap flux $\psi_{ag,a}$, $\psi_{ag,b}$, $\psi_{ag,c}$ of the asynchronous motor 3.

Said three-phase flux sensor/sensors of said flux sensor unit 4 measure the three-phase airgap flux of said asynchronous motor 3 and provide a measured airgap flux $\psi_{ag,a}$, $\psi_{ag,b}$, $\psi_{ag,c}$ to said flux observer 5 via a first abc/$\alpha\beta$-converter 45. Said first abc/$\alpha\beta$-converter 45 receives the measured airgap flux $\psi_{ag,a}$, $\psi_{ag,b}$, $\psi_{ag,c}$ from said flux sensor unit 4, converts/transforms the measured airgap flux $\psi_{ag,a}$, $\psi_{ag,b}$, $\psi_{ag,c}$ in abc-reference frame to a measured airgap flux $\overline{\psi}^s_{ag}$ vector signal in a $\alpha\beta$-reference frame, i.e. in stationary space vector coordinates, and forwards said converted measured airgap flux $\overline{\psi}^s_{ag}$ vector signal in a $\alpha\beta$-reference frame to said flux observer 5.

Said flux observer 5 receives the measured airgap flux $\overline{\psi}^s_{ag}$ of the asynchronous motor 3 from said flux sensor unit 4. In yet another different embodiment, said arrangement further comprises two or more planar energy harvester coils placed in the airgap of said asynchronous motor arranged to measure the airgap flux $\overline{\psi}^s_{ag}$ of the asynchronous motor.

The arrangement according to the present another embodiment also comprises two or more current sensors 31 arranged in the three-phase motor input between said inverter unit 2 and said asynchronous motor 3. Said two or more current sensors 31 measure the three-phase stator current of said asynchronous motor 3 and provide a measured stator current $i_a$, $i_b$, $i_c$ to said flux observer 5 via a second abc/$\alpha\beta$-converter 43. Said second abc/$\alpha\beta$-converter 43 receives the measured stator current $i_a$, $i_b$, $i_c$ from said two or more current sensors 31, converts/transforms the measured stator current $i_a$, $i_b$, $i_c$ in abc-reference frame to a stator current $\overline{i}^s_s$ vector signal in a $\alpha\beta$-reference frame, i.e. in stationary space vector coordinates, and forwards said converted stator current $\overline{i}^s_s$ vector signal in a $\alpha\beta$-reference frame to said flux observer 5.

The arrangement according to the present another embodiment also comprises two or more optional voltage sensors 32 arranged in the three-phase motor input between said inverter unit 2 and said asynchronous motor 3. Said two or more optional voltage sensors 32 are arranged to measure the three-phase stator voltage of said asynchronous motor 3 and provide a measured stator voltage $u_a$, $u_b$, $u_c$ to said flux observer 5 via a third abc/$\alpha\beta$-converter 44. Said third abc/$\alpha\beta$-converter 44 receives the measured stator voltage $u_a$, $u_b$, $u_c$ from said two or more optional voltage sensors 32, converts/transforms the measured stator voltage $u_a$, $u_b$, $u_c$ in abc-reference frame to a stator voltage $\overline{u}^s_s$ vector signal in a $\alpha\beta$-reference frame, i.e. in stationary space vector coordinates, and forwards said converted stator voltage $\overline{u}^s_s$ vector signal in a $\alpha\beta$-reference frame to said flux observer 5.

In the presented embodiment said said flux observer 5 receives the converted stator voltage $\overline{u}^s_s$ vector signal in a $\alpha\beta$-reference frame being converted from the measured stator voltage $u_a$, $u_b$, $u_c$. In an alternative embodiment, the stator voltage can be determined using the swich state information together with the measured DC voltage.

The arrangement according to the present another embodiment also comprises an $\alpha\beta$/dq-converter 41. Said $\alpha\beta$/dq-converter 41 receives the measured stator current $\overline{i}^s_s$ vector signal from said second abc/$\alpha\beta$-converter 43, converts/transforms the stator current $\overline{i}^s_s$ vector signal in a $\alpha\beta$-reference frame, i.e. in stationary space vector coordinates, to a stator current $\overline{i}_s$ vector signal in a dq-reference frame, i.e. in rotor coordinates, and forwards said converted stator current $\overline{i}_s$ vector signal in a dq-reference frame to said flux observer 5.

Said flux observer 5 receives the measured stator current $\overline{i}^s_s$ vector signal from said two or more current sensors 31 via said second abc/$\alpha\beta$-converter 43 and the measured stator voltage $u_a$, $u_b$, $u_c$ from said two or more optional voltage sensors 32 via said third abc/$\alpha\beta$-converter 44. Said flux observer 5 also receives the converted stator current $\overline{i}_s$ vector signal in a dq-reference frame from said $\alpha\beta$/dq-converter 41.

In the arrangement according to the present another embodiment said flux observer 5 calculates a flux amplitude estimate $\hat{\psi}$ and a motor angular speed estimate $\hat{\omega}_m$ utilizing said measured airgap flux $\overline{\psi}^s_{ag}$, said measured stator current $\overline{i}^s_s$ vector signal in a $\alpha\beta$-reference frame, said stator current $\overline{i}_s$ vector signal in a dq-reference frame and said measured stator voltage $u_a$, $u_b$, $u_c$. In the calculation of said flux amplitude estimate $\hat{\psi}$ and said motor angular speed estimate $\hat{\omega}_m$ said flux observer 5 utilizes Equations 6 to 16 and/or Equations 17 to 22.

Said flux observer 5 may calculate said flux amplitude estimate $\hat{\psi}$, e.g. the rotor flux amplitude estimate $\hat{\psi}_R$ in

accordance with Equation 19 as:

$$\hat{\psi}_R = \sqrt{\hat{\psi}^2{}_{R\alpha} + \hat{\psi}^2{}_{R\beta}} \qquad (19)$$

Said flux observer 5 may calculate said motor angular speed estimate $\hat{\omega}_m$ in accordance with Equation 22 as:

$$\hat{\omega}_m = \hat{\omega}_s - \hat{\omega}_r = \hat{\omega}_s - \frac{\hat{R}_R i_q}{\hat{\psi}_R} \qquad (22)$$

In the calculation, the slip frequency estimate $\hat{\omega}_r$ can be obtained from Equation 21 as:

$$\hat{\omega}_r = \frac{\hat{R}_R i_q}{\hat{\psi}_R} \qquad (21)$$

In the present another embodiment said calculated flux estimate $\hat{\psi}$ is a rotor flux estimate $\hat{\psi}_R$. In yet another embodiment said calculated flux estimate $\hat{\psi}$ may e.g. also be a stator flux estimate $\hat{\psi}_s$. Said flux observer 5 is arranged to forward and forwards said calculated rotor flux estimate $\hat{\psi}_R$ and said calculated motor angular speed estimate $\hat{\omega}_m$ for the calculation of a stator voltage reference $\overline{u}^s_{s,ref}$ vector signal in a αβ-reference frame, said calculated stator voltage reference $\overline{u}^s_{s,ref}$ vector signal being utilized in PWM unit 1 in controlling said asynchronous motor 3, i.e. in controlling said inverter unit 2 in driving said asynchronous motor 3.

The arrangement according to the present another embodiment also comprises a flux controller 6, a speed controller 7, a current controller 8 and a torque gain unit 9. In the present another embodiment said flux observer 5 is arranged to forward said rotor flux estimate $\hat{\psi}_R$ to said flux controller 6 and to said torque gain unit 9, and arranged to forward said motor angular speed estimate $\hat{\omega}_m$ to said speed controller 7.

Said flux controller 6 receives a flux reference $\psi_{ref}$ as an input value. In the present another embodiment said received flux reference $\psi_{ref}$ is a rotor flux reference $\psi_{R,ref}$. In yet another embodiment said received flux reference $\psi_{ref}$ may e.g. also be a stator flux reference $\psi_{s,ref}$. Said flux controller 6 also receives the rotor flux estimate $\hat{\psi}_R$ from said flux observer 5. Said flux controller 6 calculates an $i_d$ current reference value $i_{d,ref}$ utilizing said rotor flux reference $\psi_{R,ref}$ and said rotor flux estimate $\hat{\psi}_R$. Said flux controller 6 is arranged to forward said calculated $i_d$ current reference value $i_{d,ref}$ to said current controller 8.

Said speed controller 7 receives a motor angular speed reference $\omega_{m,ref}$ as an input value. Said speed controller 7 also receives the motor angular speed estimate $\hat{\omega}_m$ from said flux observer 5. Said speed controller 7 calculates a torque reference value $T_{ref}$ utilizing said motor angular speed reference $\omega_{m,ref}$ and said motor angular speed estimate $\hat{\omega}_m$. Said speed controller 7 is arranged to forward said calculated torque reference value $T_{ref}$ to said torque gain unit 9.

Said torque gain unit 9 receives the calculated torque reference value $T_{ref}$ from said speed controller 7 and said rotor flux estimate $\hat{\psi}_R$ from said flux observer 5. Said torque gain unit 9 calculates an $i_q$ current reference value $i_{q,ref}$ utilizing said calculated torque reference value $T_{ref}$ in accordance with Equation 23 as:

$$i_{q,ref} = T_{ref} \Big/ \hat{\psi}_R \qquad (23)$$

Said torque gain unit 9 is arranged to forward said calculated $i_q$ current reference value $i_{q,ref}$ to said current controller 8.

The arrangement according to the present another embodiment also comprises an αβ/dq-converter 41 and a dq/αβ-converter 42.

In the arrangement according to the present another embodiment said flux observer 5 calculates a rotor flux angle estimate $\hat{\theta}_s$ utilizing said measured stator current $i_a$, $i_b$, $i_c$. Said flux observer 5 is arranged to forward and forwards said calculated rotor flux angle estimate $\hat{\theta}_s$ to said αβ/dq-converter 41 and to said dq/αβ-converter 42.

Said αβ/dq-converter 41 receives the measured stator current $\bar{i}^s_s$ vector signal from said two or more current sensors 31 via said second abc/αβ-converter 43, converts/transforms the received stator current $\bar{i}^s_s$ vector signal in a αβ-reference frame, i.e. in stationary space vector coordinates, to a stator current $\bar{i}_s$ vector signal in a dq-reference frame, i.e.

in rotor coordinates, and forwards said converted stator current $\bar{i}_s$ vector signal in a dq-reference frame to the current controller 8.

Said current controller 8 receives the converted stator current $\bar{i}_s$ vector signal in a dq-reference frame from said αβ/dq-converter 41, the calculated $i_d$ current reference value $i_{d,ref}$ from said flux controller 6 and the calculated $i_q$ current reference value $i_{q,ref}$ from said torque gain unit 9.

Said current controller 8 calculates a stator voltage reference $\bar{u}_{s,ref}$ vector signal in a dq-reference frame utilizing said converted stator current $\bar{i}_s$ vector signal in a dq-reference frame, said calculated $i_d$ current reference value $i_{d,ref}$ and said calculated $i_q$ current reference value $i_{q,ref}$. Said current controller 8 is arranged to forward said calculated stator voltage reference $\bar{u}_{s,ref}$ vector signal in a dq-reference frame to the PWM unit 1 via said dq/αβ-converter 42.

Said current controller 8 forwards said calculated stator voltage reference $\bar{u}_{s,ref}$ vector signal in a dq-reference frame to the dq/αβ-converter 42. Said dq/αβ-converter 42 receives the calculated stator voltage reference $\bar{u}_{s,ref}$ vector signal in a dq-reference frame from said current controller 8, converts/transforms the stator voltage reference $\bar{u}_{s,ref}$ vector signal in a dq-reference frame, i.e. in rotor coordinates, to a stator voltage reference $\overline{u}_{s,ref}^{\,s}$ vector signal in a αβ-reference frame, i.e. in stationary space vector coordinates, and forwards said converted stator voltage reference $\overline{u}_{s,ref}^{\,s}$ vector signal in a αβ-reference frame to the the PWM unit 1.

Said PWM unit 1 receives said converted stator voltage reference $\overline{u}_{s,ref}^{\,s}$ vector signal in a αβ-reference frame from said dq/αβ-converter 42. In accordance with the present invention said PWM unit 1 utilizes said stator voltage reference $\overline{u}_{s,ref}^{\,s}$ vector signal in controlling said asynchronous motor 3, i.e. in controlling said inverter unit 2 in driving said asynchronous motor 3.

In the presented embodiment of Figure 5 an arrangement for controlling a three-phase asynchronous motor is illustrated. In a similar fashion the arrangement for controlling a three-phase asynchronous motor may be used with any other multiphase asynchronous motors, this comprising six-phase asynchronous motors among others.

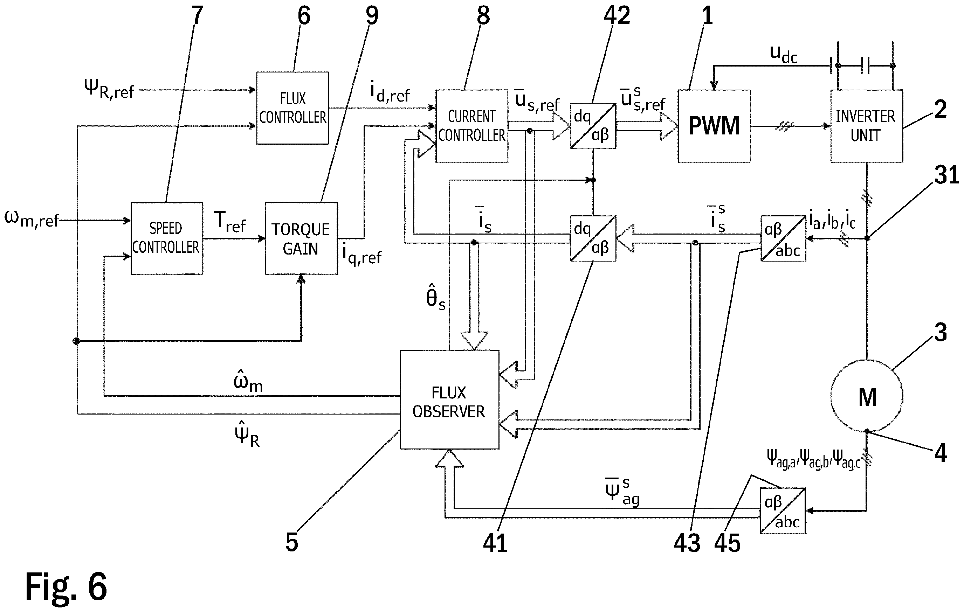

Figure 6 illustrates a third embodiment of an arrangement for controlling an asynchronous motor according to the present invention. In the presented embodiment an arrangement for controlling a three-phase asynchronous motor is illustrated. The arrangement according to the present third embodiment comprises a PWM unit 1 (PWM, Pulse Width Modulator) and an inverter unit 2. Said arrangement is used for controlling an asynchronous motor 3. The PWM unit 1 of the presented embodiment is only example of a control unit for providing control instruction, i.e. switching instruction to the inverter unit 2. There are several other control/modulation techniques equally suited for providing switching instruction to the inverter unit 2. As an example, such control/modulation techniques would include direct torque control technique or vector modulation technique among others.

In the presented embodiment, the asynchronous motor 3 is driven by said inverter unit 2, which inverter unit 2 is controlled by said PWM unit 1. Said PWM unit 1 receives the measured input voltage $u_{dc}$ of said inverter unit 2 from a voltage sensor in the input of said inverter unit 2. Said PWM unit 1 and said inverter unit 2 may be realized in a frequency converter. The arrangement according to the present third embodiment also comprises a flux sensor unit 4 and a flux observer 5. Said flux observer 5 may be realized in a frequency converter.

Said flux sensor unit 4 comprises three-phase flux sensor/sensors placed in the airgap of said asynchronous motor 3 arranged to measure the three-phase airgap flux $\psi_{ag,a}$, $\psi_{ag,b}$, $\psi_{ag,c}$ of the asynchronous motor 3. Said three-phase flux sensor/sensors of said flux sensor unit 4 may comprise two or more hall effect sensors. The arrangement according to the present third embodiment may also comprise one or more planar energy harvester coil/coils arranged to provide power to said two or more hall effect sensors. Said three-phase flux sensor/sensors of said flux sensor unit 4 may also comprise two or more optional energy harvester coils arranged to measure the airgap flux $\psi_{ag,a}$, $\psi_{ag,b}$, $\psi_{ag,c}$ of the asynchronous motor 3.

Said three-phase flux sensor/sensors of said flux sensor unit 4 measure the three-phase airgap flux of said asynchronous motor 3 and provide a measured airgap flux $\psi_{ag,a}$, $\psi_{ag,b}$, $\psi_{ag,c}$ to said flux observer 5 via a first abc/αβ-converter 45. Said first abc/αβ-converter 45 receives the measured airgap flux $\psi_{ag,a}$, $\psi_{ag,b}$, $\psi_{ag,c}$ from said flux sensor unit 4, converts/transforms the measured airgap flux $\psi_{ag,a}$, $\psi_{ag,b}$, $\psi_{ag,c}$ in abc-reference frame to a measured airgap flux $\overline{\psi}^{s}_{ag}$ vector signal in a αβ-reference frame, i.e. in stationary space vector coordinates, and forwards said converted measured airgap flux $\overline{\psi}^{s}_{ag}$ vector signal in a αβ-reference frame to said flux observer 5.

Said flux observer 5 receives the measured airgap flux $\overline{\psi}^{s}_{ag}$ of the asynchronous motor 3 from said flux sensor unit 4. In yet another different embodiment, said arrangement further comprises two or more planar energy harvester coils placed in the airgap of said asynchronous motor arranged to measure the airgap flux $\overline{\psi}_{ag}^{s}$ of the asynchronous motor.

The arrangement according to the present third embodiment also comprises two or more current sensors 31 arranged in the three-phase motor input between said inverter unit 2 and said asynchronous motor 3. Said two or more current sensors 31 measure the three-phase stator current of said asynchronous motor 3 and provide a measured stator current $i_a$, $i_b$, $i_c$ to said flux observer 5 via a second abc/$\alpha\beta$-converter 43. Said second abc/$\alpha\beta$-converter 43 receives the measured stator current $i_a$, $i_b$, $i_c$ from said two or more current sensors 31, converts/transforms the measured stator current $i_a$, $i_b$, $i_c$ in abc-reference frame to a stator current $\overline{i}^{s}_{s}$ vector signal in a $\alpha\beta$-reference frame, i.e. in stationary space vector coordinates, and forwards said converted stator current $\overline{i}^{s}_{s}$ vector signal in a $\alpha\beta$-reference frame to said flux observer 5.

The arrangement according to the present third embodiment also comprises a flux controller 6, a speed controller 7, a current controller 8 and a torque gain unit 9. In the arrangement according to the present third embodiment said current controller 8 is arranged to forward a calculated stator voltage reference $\overline{u}_{s,ref}$ vector signal in a dq-reference frame to said flux observer 5. Said flux observer 5 receives the calculated stator voltage reference $\overline{u}_{s,ref}$ vector signal in a dq-reference frame from said current controller 8.

The arrangement according to the present third embodiment also comprises an $\alpha\beta$/dq-converter 41. Said $\alpha\beta$/dq-converter 41 receives the measured stator current $\overline{i}^{s}_{s}$ vector signal from said second abc/$\alpha\beta$-converter 43, converts/transforms the stator current $\overline{i}^{s}_{s}$ vector signal in a $\alpha\beta$-reference frame, i.e. in stationary space vector coordinates, to a stator current $\overline{i}_{s}$ vector signal in a dq-reference frame, i.e. in rotor coordinates, and forwards said converted stator current $\overline{i}_{s}$ vector signal in a dq-reference frame to said flux observer 5.

Said flux observer 5 receives the measured stator current $\overline{i}^{s}_{s}$ vector signal from said two or more current sensors 31 via said second abc/$\alpha\beta$-converter 43 and the calculated stator voltage reference $\overline{u}_{s,ref}$ vector signal in a dq-reference frame from said current controller 8. Said flux observer 5 also receives the converted stator current $\overline{i}_{s}$ vector signal in a dq-reference frame from said $\alpha\beta$/dq-converter 41.

In the arrangement according to the present third embodiment said flux observer 5 calculates a flux amplitude estimate $\hat{\psi}$ and a motor angular speed estimate $\hat{\omega}_m$ utilizing said measured airgap flux $\overline{\psi}_{ag}^{s}$, said measured stator current $\overline{i}^{s}_{s}$ vector signal in a $\alpha\beta$-reference frame, said stator current $\overline{i}_{s}$ vector signal in a dq-reference frame and said calculated stator voltage reference $\overline{u}_{s,ref}$ vector signal in a dq-reference frame. In the calculation of said flux amplitude estimate $ and said motor angular speed estimate $\hat{\omega}_m$ said flux observer 5 utilizes Equations 6 to 16 and/or Equations 17 to 22.

Said flux observer 5 may calculate said flux amplitude estimate $\hat{\psi}$, e.g. the rotor flux amplitude estimate $\hat{\psi}_R$ in accordance with Equation 19 as:

$$\widehat{\psi}_R = \sqrt{\widehat{\psi}^2{}_{R\alpha} + \widehat{\psi}^2{}_{R\beta}} \qquad (19)$$

Said flux observer 5 may calculate said motor angular speed estimate $\hat{\omega}_m$ in accordance with Equation 22 as:

$$\widehat{\omega}_m = \widehat{\omega}_s - \widehat{\omega}_r = \widehat{\omega}_s - \frac{\hat{R}_R i_q}{\widehat{\psi}_R} \qquad (22)$$

In the calculation, the slip frequency estimate $\hat{\omega}_r$ can be obtained from Equation 21 as:

$$\widehat{\omega}_r = \frac{\hat{R}_R i_q}{\widehat{\psi}_R} \qquad (21)$$

In the present third embodiment said calculated flux estimate $\hat{\psi}$ is a rotor flux estimate $\hat{\psi}_R$. In yet another embodiment said calculated flux estimate $\hat{\psi}$ may e.g. also be a stator flux estimate $\hat{\psi}_s$. Said flux observer 5 is arranged to forward and forwards said calculated rotor flux estimate $\hat{\psi}_R$ and said calculated motor angular speed estimate $\hat{\omega}_m$ for the calculation of a stator voltage reference $\overline{u}_{s,ref}^{s}$ vector signal in a $\alpha\beta$-reference frame, said calculated stator voltage reference $\overline{u}_{s,ref}^{s}$ vector signal being utilized in PWM unit 1 in controlling said asynchronous motor 3, i.e. in controlling said inverter unit 2 in driving said asynchronous motor 3.

In the present third embodiment said flux observer 5 is arranged to forward said rotor flux estimate $\hat{\psi}_R$ to said flux controller 6 and to said torque gain unit 9, and arranged to forward said motor angular speed estimate $\hat{\omega}_m$ to said speed controller 7.

Said flux controller 6 receives a flux reference $\psi_{ref}$ as an input value. In the present third embodiment said received flux reference $\psi_{ref}$ is a rotor flux reference $\psi_{R,ref}$. In yet another embodiment said received flux reference $\psi_{ref}$ may e.g. also be a stator flux reference $\psi_{s,ref}$. Said flux controller 6 also receives the rotor flux estimate $\hat{\psi}_R$ from said flux observer 5. Said flux controller 6 calculates an $i_d$ current reference value $i_{d,ref}$ utilizing said rotor flux reference $\psi_{R,ref}$ and said rotor flux estimate $\hat{\psi}_R$. Said flux controller 6 is arranged to forward said calculated $i_d$ current reference value $i_{d,ref}$ to said current controller 8.

Said speed controller 7 receives a motor angular speed reference $\omega_{m,ref}$ as an input value. Said speed controller 7 also receives the motor angular speed estimate $\hat{\omega}_m$ from said flux observer 5. Said speed controller 7 calculates a torque reference value $T_{ref}$ utilizing said motor angular speed reference $\omega_{m,ref}$ and said motor angular speed estimate $\hat{\omega}_m$. Said speed controller 7 is arranged to forward said calculated torque reference value $T_{ref}$ to said torque gain unit 9.

Said torque gain unit 9 receives the calculated torque reference value $T_{ref}$ from said speed controller 7 and said rotor flux estimate $\hat{\psi}_R$ from said flux observer 5. Said torque gain unit 9 calculates an $i_q$ current reference value $i_{q,ref}$ utilizing said calculated torque reference value $T_{ref}$ in accordance with Equation 23 as:

$$i_{q,ref} = \frac{T_{ref}}{\hat{\psi}_R} \tag{23}$$

Said torque gain unit 9 is arranged to forward said calculated $i_q$ current reference value $i_{q,ref}$ to said current controller 8.

The arrangement according to the present third embodiment also comprises an $\alpha\beta$/dq-converter 41 and a dq/$\alpha\beta$-converter 42.

In the arrangement according to the present third embodiment said flux observer 5 calculates a rotor flux angle estimate $\hat{\theta}_s$ utilizing said measured stator current $i_a, i_b, i_c$. Said flux observer 5 is arranged to forward and forwards said calculated rotor flux angle estimate $\hat{\theta}_s$ to said $\alpha\beta$/dq-converter 41 and to said dq/$\alpha\beta$-converter 42.

Said $\alpha\beta$/dq-converter 41 receives the measured stator current $\bar{i}^s{}_s$ vector signal from said two or more current sensors 31 via said second abc/$\alpha\beta$-converter 43, converts/transforms the received stator current $\bar{i}^s{}_s$ vector signal in a $\alpha\beta$-reference frame, i.e. in stationary space vector coordinates, to a stator current $\bar{i}_s$ vector signal in a dq-reference frame, i.e. in rotor coordinates, and forwards said converted stator current $\bar{i}_s$ vector signal in a dq-reference frame to the current controller 8.

Said current controller 8 receives the converted stator current $\bar{i}_s$ vector signal in a dq-reference frame from said $\alpha\beta$/dq-converter 41, the calculated $i_d$ current reference value $i_{d,ref}$ from said flux controller 6 and the calculated $i_q$ current reference value $i_{q,ref}$ from said torque gain unit 9.

Said current controller 8 calculates a stator voltage reference $\bar{u}_{s,ref}$ vector signal in a dq-reference frame utilizing said converted stator current $\bar{i}_s$ vector signal in a dq-reference frame, said calculated $i_d$ current reference value $i_{d,ref}$ and said calculated $i_q$ current reference value $i_{q,ref}$. Said current controller 8 is arranged to forward said calculated stator voltage reference $\bar{u}_{s,ref}$ vector signal in a dq-reference frame to the PWM unit 1 via said dq/$\alpha\beta$-converter 42.

Said current controller 8 forwards said calculated stator voltage reference $\bar{u}_{s,ref}$ vector signal in a dq-reference frame to the dq/$\alpha\beta$-converter 42. Said dq/$\alpha\beta$-converter 42 receives the calculated stator voltage reference $\bar{u}_{s,ref}$ vector signal in a dq-reference frame from said current controller 8, converts/transforms the stator voltage reference $\bar{u}_{s,ref}$ vector signal in a dq-reference frame, i.e. in rotor coordinates, to a stator voltage reference $\bar{u}^s_{s,ref}$ vector signal in a $\alpha\beta$-reference frame, i.e. in stationary space vector coordinates, and forwards said converted stator voltage reference $\bar{u}^s_{s,ref}$ vector signal in a $\alpha\beta$-reference frame to the the PWM unit 1.

Said PWM unit 1 receives said converted stator voltage reference $\bar{u}^s_{s,ref}$ vector signal in a $\alpha\beta$-reference frame from said dq/$\alpha\beta$-converter 42. In accordance with the present invention said PWM unit 1 utilizes said stator voltage reference $\bar{u}^s_{s,ref}$ vector signal in controlling said asynchronous motor 3, i.e. in controlling said inverter unit 2 in driving said asynchronous motor 3.

In the presented embodiment of Figure 6 an arrangement for controlling a three-phase asynchronous motor is illustrated. In a similar fashion the arrangement for controlling a three-phase asynchronous motor may be used with any other multiphase asynchronous motors, this comprising six-phase asynchronous motors among others.

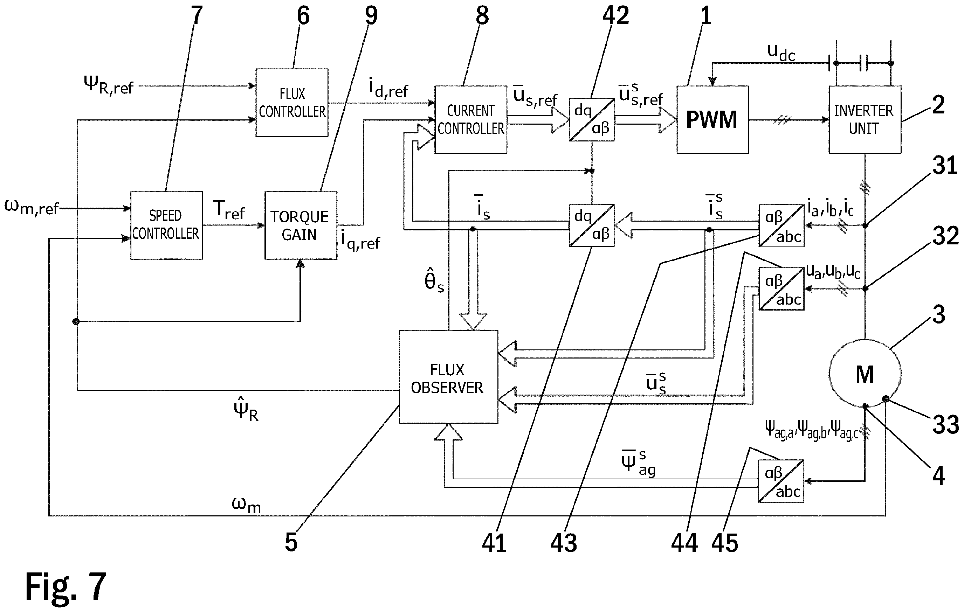

Figure 7 illustrates a fourth embodiment of an arrangement for controlling an asynchronous motor according to the present invention. In the presented embodiment an arrangement for controlling a three-phase asynchronous motor is illustrated. The arrangement according to the present fourth embodiment comprises a PWM unit 1 (PWM, Pulse Width Modulator) and an inverter unit 2. Said arrangement is used for controlling an asynchronous motor 3. Said asynchronous motor 3 is driven by said inverter unit 2, which inverter unit 2 is controlled by said PWM unit 1. Said PWM unit 1 receives the measured input voltage $u_{dc}$ of said inverter unit 2 from a voltage sensor in the input of said inverter unit 2. Said PWM unit 1 and said inverter unit 2 may be realized in a frequency converter.

The arrangement according to the present fourth embodiment is a same embodiment which has been presented in Figure 5 with the exception that in addition to the embodiment of Figure 5 the present fourth embodiment of Figure 7 also comprises a speed sensor unit 33 placed in said asynchronous motor 3 arranged to measure the angular speed $\omega_m$ of the asynchronous motor 3. Said speed sensor unit 33 is arranged to measure the angular speed $\omega_m$ of the asynchronous motor 3 and provide the measured angular speed $\omega_m$ to a speed controller 7.

In the arrangement according to the present fourth embodiment said speed controller 7 receives a motor angular speed reference $\omega_{m,ref}$ as an input value. Said speed controller 7 also receives the measured angular speed $\omega_m$ from said speed sensor unit 33. Said speed controller 7 calculates a torque reference value $T_{ref}$ utilizing said motor angular speed reference $\omega_{m,ref}$ and said measured angular speed $\hat{\omega}_m$. Said speed controller 7 is arranged to forward said calculated torque reference value $T_{ref}$ to a torque gain unit 9 as in the embodiment of Figure 5.

In the presented embodiment of Figure 7 an arrangement for controlling a three-phase asynchronous motor is illustrated. In a similar fashion the arrangement for controlling a three-phase asynchronous motor may be used with any other multiphase asynchronous motors, this comprising six-phase asynchronous motors among others.

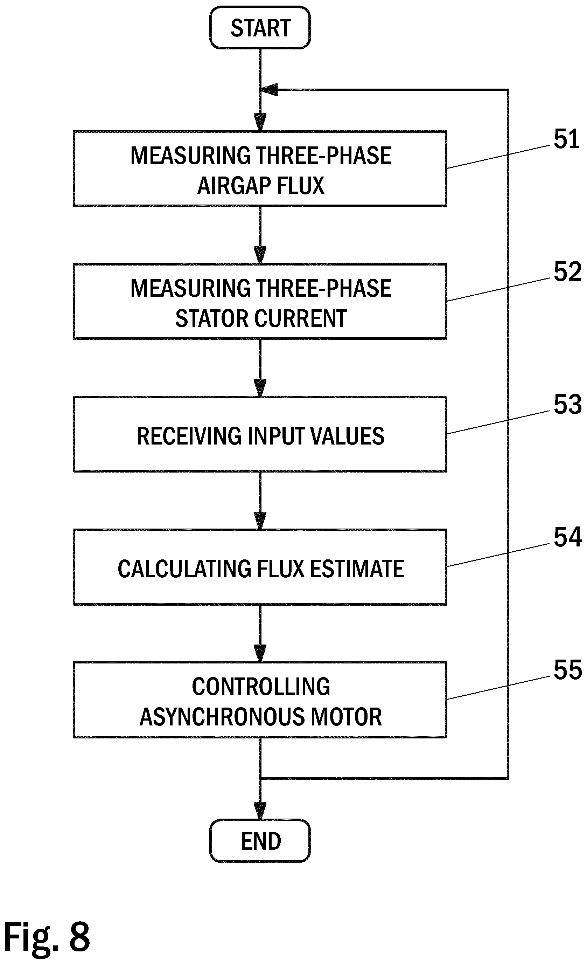

Figure 8 illustrates an embodiment of a method for controlling an asynchronous motor according to the present invention. In the presented embodiment a method for controlling a three-phase asynchronous motor is illustrated. In the method according to the present embodiment airgap flux $\overline{\psi}^s_{ag}$ of an asynchronous motor 3 is first measured 51 by a flux sensor unit 4. In the presented embodiment said flux sensor unit 4 comprises two or more hall effect sensors placed in the airgap of said asynchronous motor 3. Said flux sensor unit 4 may also comprise two or more optional energy harvester coils. Said flux sensor unit 4 measures 51 the airgap flux $\overline{\psi}^s_{ag}$ of the asynchronous motor 3 and forwards the measured airgap flux $\overline{\psi}^s_{ag}$ to a flux observer 5.

Thereafter, in the method according to the present embodiment the three-phase stator current $i_a$, $i_b$, $i_c$ of said asynchronous motor 3 is measured 52 by two or more current sensors 31. In the presented embodiment said two or more current sensors 31 are arranged in the three-phase motor input between an inverter unit 2 and said asynchronous motor 3. Said two or more current sensors 31 measure 52 the three-phase stator current $i_a$, $i_b$, $i_c$ of said asynchronous motor 3 and forward the measured the three-phase stator current $i_a$, $i_b$, $i_c$ to said flux observer 5.

Also, in the method according to the present embodiment the three-phase stator voltage $u_a$, $u_b$, $u_c$ of said asynchronous motor 3 is measured by three-phase voltage sensor/sensors 32 arranged in the three-phase motor input between said inverter unit 2 and said asynchronous motor 3. Alternatively, a stator voltage reference $\overline{u}_{s,ref}$ vector signal in a dq-reference frame is calculated in a current controller 8. Said three-phase voltage sensor/sensors 32 measure and forward the measured the three-phase stator voltage $u_a$, $u_b$, $u_c$ to said reduced order flux observer 5. Alternatively, said current controller 8 calculates and forwards the stator voltage reference $\overline{u}_{s,ref}$ vector signal in a dq-reference frame to said flux observer 5.

Thereafter, in the method according to the present embodiment a flux estimate $\hat{\psi}$ and a motor angular speed estimate $\hat{\omega}_m$ are calculated 53 by said flux observer 5 utilizing said measured airgap flux $\overline{\psi}^s_{ag}$, said measured stator current $i_a$, $i_b$, $i_c$ and said measured stator voltage $\overline{u}^s_s$. In the present embodiment said calculated flux estimate $\hat{\psi}$ may be e.g. a rotor flux estimate $\hat{\psi}_R$, or a stator flux estimate $\hat{\psi}_s$. In the calculation 53 of the flux estimate $\hat{\psi}$ and a motor angular speed estimate $\hat{\omega}_m$ a calculated stator voltage reference $\overline{u}_{s,ref}$ vector signal in a dq-reference frame may be utilized, or optionally a measured stator voltage $u_a$, $u_b$, $u_c$ may be utilized. Said flux observer 5 forwards said calculated flux estimate $\hat{\psi}$ and said calculated motor angular speed estimate $\hat{\omega}_m$ to one or more controllers.

After this, in the method according to the present embodiment a stator voltage reference $\overline{u}^s_{s,ref}$ vector signal in a $\alpha\beta$-reference frame is calculated 54 by one or more controllers utilizing said flux estimate $\hat{\psi}$ and said motor angular speed estimate $\hat{\omega}_m$.

Thereafter, in the method according to the present embodiment, said asynchronous motor 3 is controlled 55, wherein in said controlling 55 said calculated stator voltage reference $\overline{u}_{s,ref}^{s}$ vector signal is utilized in PWM unit 1 to control said asynchronous motor 3, i.e. to control said inverter unit 2 in driving said asynchronous motor 3.

In the presented embodiment of Figure 8 a method for controlling a three-phase asynchronous motor is illustrated. In a similar fashion the method for controlling a three-phase asynchronous motor may be used with any other multiphase asynchronous motors, this comprising six-phase asynchronous motors among others.

The solution according to the present invention provides a high-quality and stable arrangement and method for controlling an asynchronous motor.

With the help of the solution for controlling an asynchronous motor according to the present invention the previously presented problems of quality of the control as well as the stability of the control are solved and/or reduced.

The invention can be implemented in existing frequency converters. Present frequency converters comprise processors and memory that can be utilized in the functions according to embodiments of the invention. Thus, all modifications and configurations required for implementing an embodiment of the invention may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

In the following a list of used symbols:

Symbols in three-phase system:

$i_a$     current in phase a,
$i_b$     current in phase b,
$i_c$     current in phase c,
$u_a$     voltage of phase-a (phase to ground),
$u_b$     voltage of phase-b (phase to ground),
$u_c$     voltage of phase-c (phase to ground),
$\psi_{ag,a}$     measured airgap flux in the direction of phase a,
$\psi_{ag,b}$     measured airgap flux in the direction of phase b,
$\psi_{ag,c}$     measured airgap flux in the direction of phase c,

Symbols in $\alpha\beta$ coordinates:

$\overline{i}_s^s$     stator current vector in $\alpha\beta$ coordinates,

$\overline{u}_s^s$     measured stator voltage vector in $\alpha\beta$ coordinates,

$\overline{u}_{s,ref}^s$     stator voltage reference vector in $\alpha\beta$ coordinates,

$\overline{\psi}_{ag}^s$     measured airgap flux in $\alpha\beta$ coordinates,

$\overline{\psi}_s^s$     stator flux vector in $\alpha\beta$ coordinates,

$\widehat{\overline{\psi}}_s^s$     estimated stator flux vector in $\alpha\beta$ coordinates,

$\widehat{\overline{\psi}}_R^s$     stator flux estimate vector in $\alpha\beta$ coordinates,

$\hat{\psi}_{R\alpha}$     rotor flux estimate $\alpha$ component,

$\hat{\psi}_{R\beta}$     rotor flux estimate $\beta$ component,

Symbols in *dq* coordinates

| | |
|---|---|
| $\bar{i}_s$ | stator current vector in *dq* coordinates, |
| $\bar{u}_{s,ref}$ | stator voltage reference vector in *dq* coordinates, |
| $i_d$ | measured current d component, |
| $i_{d,ref}$ | current reference d component, |
| $i_q$ | measured current q component, |
| $i_{q,ref}$ | current reference q component, |

General Symbols

| | |
|---|---|
| $\hat{\psi}_R$ | rotor flux amplitude estimate, |
| $\hat{\psi}_s$ | stator flux amplitude estimate, |
| $\hat{\psi}_{R,ref}$ | rotor flux amplitude reference, |
| $\psi_{s,ref}$ | stator flux amplitude reference, |
| $\hat{\theta}_s$ | rotor flux angle, |
| $\hat{\omega}_s$ | stator frequency estimate, |
| $\hat{\omega}_r$ | slip frequency estimate, |
| $\hat{\omega}_m$ | rotor angular speed estimate, |
| $\omega_m$ | rotor angular speed, |
| $\hat{L}_{s\sigma}$ | T model stator leakage inductance, |
| $\hat{L}_{\sigma}$ | Inverse-$\Gamma$ model leakage inductance. |

**Claims**

1. An arrangement for controlling an asynchronous motor (3), said arrangement comprising:

    - an inverter unit (2) arranged to drive said asynchronous motor (3); a flux sensor unit (4) comprising polyphase flux sensor/sensors placed in the airgap of said asynchronous motor (3) arranged to measure the polyphase airgap flux $\psi_{ag,a}$, $\psi_{ag,b}$, ... $\psi_{ag,m}$ of the asynchronous motor (3);
    - a flux observer (5); and
    - polyphase current sensor/sensors (31) arranged to measure polyphase stator current $i_a$, $i_b$, ... $i_n$ of said asynchronous motor (3),
    - wherein said flux observer (5) is arranged:

        - to receive an airgap flux $\bar{\psi}^s_{ag}$ vector signal in a $\alpha\beta$-reference frame from said flux sensor unit (4) via a first abc/$\alpha\beta$-converter (45),
        - to receive a stator current $\bar{i}^s_s$ vector signal in a $\alpha\beta$-reference frame from said polyphase current sensor/sensors (31) via a second abc/$\alpha\beta$-converter (43),
        - to receive a stator current $\bar{i}_s$ vector signal in a dq-reference frame from a $\alpha\beta$/dq-converter (41), and
        - either to receive/calculate a stator voltage reference or to receive a stator voltage $\bar{u}^s_s$ vector signal in a $\alpha\beta$-reference frame from polyphase voltage sensor/sensors (32) via a third abc/$\alpha\beta$-converter (44), said polyphase voltage sensor/sensors (32) arranged to measure polyphase stator voltage $u_a$, $u_b$, ... $u_n$ of said asynchronous motor (3),

        - to calculate a flux estimate $\hat{\psi}$ utilizing said airgap flux $\bar{\psi}^s_{ag}$ vector signal in a $\alpha\beta$-reference frame, said stator current $\bar{i}^s_s$ vector signal in a $\alpha\beta$-reference frame, said stator current $\bar{i}_s$ vector signal in a dq-reference frame and either one of said received/calculated stator voltage reference or said stator voltage $\bar{u}^s_s$ vector signal in a $\alpha\beta$-reference frame, and
        - wherein said flux observer (5) is used in control of said asynchronous motor (3).

2. An arrangement according to claim 1, wherein said flux observer (5) is arranged to to calculate a motor angular speed estimate $\hat{\omega}_m$ utilizing one or more of said airgap flux $\bar{\psi}^s_{ag}$ vector signal in a $\alpha\beta$-reference frame, said converted stator current $\bar{i}^s_s$ vector signal in a $\alpha\beta$-reference frame, said stator current $\bar{i}_s$ vector signal in a dq-reference frame and either one of said received/calculated stator voltage reference or said stator voltage $\bar{u}^s_s$ vector signal in a $\alpha\beta$-reference

frame, and wherein said calculated flux estimate $\hat{\psi}$ and said calculated motor angular speed estimate $\hat{\omega}_m$ being used in establishing a stator voltage reference $\overline{u}_{s,ref}^{s}$ vector signal in a $\alpha\beta$-reference frame, said stator voltage reference $\overline{u}_{s,ref}^{s}$ vector signal in a $\alpha\beta$-reference frame being used in control of said asynchronous motor (3).

3. An arrangement according to claim 1 or to claim 2, wherein said arrangement comprises polyphase voltage sensor/sensors (32) arranged to measure polyphase stator voltage $u_a, u_b, ... u_n$ of said asynchronous motor (3), and wherein said flux observer (5) is arranged to receive a stator voltage $\overline{u}_s^s$ vector signal in a $\alpha\beta$-reference frame from said polyphase voltage sensor/sensors (32) via a third abc/$\alpha\beta$-converter (44) and to utilize said received stator voltage $\overline{u}_s^s$ vector signal in calculating said flux estimate $\hat{\psi}$ and/or said motor angular speed estimate $\hat{\omega}_m$.

4. An arrangement according to claim 1 or to claim 2, which arrangement comprises a current controller (8) arranged to receive/calculate a stator voltage reference $\overline{u}_{s,ref}$ vector signal in a dq-reference frame and forward said stator voltage reference $\overline{u}_{s,ref}$ vector signal in a dq-reference frame to said flux observer (5), and wherein said flux observer (5) is arranged to utilize said calculated stator voltage reference $\overline{u}_{s,ref}$ vector signal in a dq-reference frame in calculating said flux estimate $\hat{\psi}$ and/or said motor angular speed estimate $\hat{\omega}_m$.

5. An arrangement according to any of the claims 1 to 4, which arrangement comprises a current controller (8), a $\alpha\beta$/dq-converter (41) and a dq/$\alpha\beta$-converter (42),

   - wherein said $\alpha\beta$/dq-converter (41) is arranged to receive a stator current $\overline{i}_s^s$ vector signal in a $\alpha\beta$-reference frame from said polyphase current sensor/sensors (31) via a second abc/$\alpha\beta$-converter (43), to convert the stator current $\overline{i}_s^s$ vector signal in a $\alpha\beta$-reference frame to a stator current $\overline{i}_s$ vector signal in a dq-reference frame, and to forward said converted stator current $\overline{i}_s$ vector signal to the current controller (8),
   - wherein said current controller (8) is arranged to calculate a stator voltage reference $\overline{u}_{s,ref}$ vector signal in a dq-reference frame utilizing said converted stator current $\overline{i}_s$ vector signal in a dq-reference frame, an $i_d$ current reference value $i_{d,ref}$ and an $i_q$ current reference value $i_{q,ref}$, and
   - wherein said dq/$\alpha\beta$-converter (42) is arranged to receive the calculated stator voltage reference $\overline{u}_{s,ref}$ vector signal in a dq-reference frame from said current controller (8), to convert the stator voltage reference $\overline{u}_{s,ref}$ vector signal in a dq-reference frame to a stator voltage reference $\overline{u}_{s,ref}^{s}$ vector signal in a $\alpha\beta$-reference frame, and to forward said converted stator voltage reference $\overline{u}_{s,ref}^{s}$ vector signal used for control of said asynchronous motor (3).

6. An arrangement according to claim 5, which arrangement comprises a flux controller (6), wherein said flux controller (6) is arranged to receive a flux reference $\psi_{ref}$ as an input value, to receive the flux estimate $\hat{\psi}$ from said flux observer (5), to calculate an $i_d$ current reference value $i_{d,ref}$ utilizing said flux reference $\psi_{ref}$ and said flux estimate $\hat{\psi}$, and to forward said calculated $i_d$ current reference value $i_{d,ref}$ to said current controller (8).

7. An arrangement according to claim 5 or to claim 6, which arrangement further comprises a speed controller (7) and a torque gain unit (9),

   - wherein said speed controller (7) is arranged to receive a motor angular speed reference $\omega_{m,ref}$ as an input value, to receive the motor angular speed estimate $\hat{\omega}_m$ from said flux observer (5), to calculate a torque reference value $T_{ref}$ utilizing said motor angular speed reference $\omega_{m,ref}$ and said motor angular speed estimate $\hat{\omega}_m$, and to forward said calculated torque reference value $T_{ref}$ to said torque gain unit (9), and
   - wherein said torque gain unit (9) is arranged to receive the calculated torque reference value $T_{ref}$ from said flux observer (5), to calculate an $i_q$ current reference value $i_{q,ref}$ utilizing said calculated torque reference value $T_{ref}$, and to forward said calculated $i_q$ current reference value $i_{q,ref}$ to said current controller (8).

8. An arrangement according to any of the claims 1 to 7, wherein said polyphase flux sensor/sensors of said flux sensor unit (4) comprise two or more hall effect sensors.

9. An arrangement according to claim 8, which arrangement further comprises one or more planar energy harvester coil/coils arranged to provide power to said two or more hall effect sensors.

10. An arrangement according to any of the claims 1 to 7, wherein said polyphase flux sensor/sensors of said flux sensor unit (4) comprise two or more planar energy harvester coils arranged to measure the polyphase airgap flux $\psi_{ag,a}$, $\psi_{ag,b}$, ... $\psi_{ag,m}$ of the asynchronous motor (3).

11. An arrangement according any of the claims 8 to 10, wherein said current controller (8), said $\alpha\beta$/dq-converter (41), said dq/$\alpha\beta$-converter (42), said flux controller (6), said speed controller (7) and said torque gain unit (9) are realized in a frequency converter.

12. An arrangement according any of the claims 1, 3 to 6 or 8 to 11, wherein said arrangement comprises a speed sensor unit (33) placed in said asynchronous motor (3) arranged to measure the angular speed $\omega_m$ of the asynchronous motor (3).

13. A method for controlling an asynchronous motor (3), in which method:

- polyphase airgap flux $\psi_{ag,a}$, $\psi_{ag,b}$, ... $\psi_{ag,m}$ of the asynchronous motor (3) is measured (51) by a flux sensor unit (4) comprising polyphase flux sensor/sensors placed in the airgap of said asynchronous motor (3);
- polyphase stator current $i_a$, $i_b$, ... $i_n$ of said asynchronous motor (3) is measured (52) by polyphase current sensor/sensors (31);
- an airgap flux $\overline{\psi}_{ag}^s$ vector signal in a $\alpha\beta$-reference frame, a converted stator current $\overline{i}^s_s$ vector signal in a $\alpha\beta$-reference frame, a stator current $\overline{i}_s$ vector signal in a dq-reference frame and either one of a received/calculated stator voltage reference or a stator voltage $\overline{u}^s_s$ vector signal in a $\alpha\beta$-reference frame are received (53) by a flux observer (5) as input values;

- a flux estimate $\hat{\psi}$ is calculated (54) by said flux observer (5) utilizing said airgap flux $\overline{\psi}_{ag}^s$ vector signal in a $\alpha\beta$-reference frame, said converted stator current $\overline{i}^s_s$ vector signal in a $\alpha\beta$-reference frame, said stator current $\overline{i}_s$ vector signal in a dq-reference frame and either one of said received/calculated stator voltage reference or said stator voltage $\overline{u}^s_s$ vector signal in a $\alpha\beta$-reference frame; and
- said flux observer (5) is used in controlling (55) said asynchronous motor (3).

14. A method according to claim 12, in which method:

- stator current $\overline{i}^s_s$ vector signal in a $\alpha\beta$-reference frame of said measured stator current $i_a$, $i_b$, ... $i_n$ is received by a $\alpha\beta$/dq-converter (41) from said polyphase current sensor/sensors (31) via a second abc/$\alpha\beta$-converter (43), and converted to a stator current $\overline{i}_s$ vector signal in a dq-reference frame, and forwarded to a current controller (8);
- stator voltage reference $\overline{u}_{s,ref}$ vector signal in a dq-reference frame is calculated by said current controller (8) utilizing said converted stator current $\overline{i}_s$ vector signal in a dq-reference frame, an $i_d$ current reference value $i_{d,ref}$ and an $i_q$ current reference value $i_{q,ref}$, and
- stator voltage reference $\overline{u}_{s,ref}$ vector signal in a dq-reference frame is converted to a to a stator voltage reference $\overline{u}_{s,ref}^s$ vector signal in a $\alpha\beta$-reference frame by a dq/$\alpha\beta$-converter (42) and said converted stator voltage reference $\overline{u}_{s,ref}^s$ vector signal is forwarded for being used in control of said asynchronous motor (3).

15. A frequency converter comprising:

- an inverter unit (2) arranged to drive an asynchronous motor (3); and
- a flux observer (5),
- wherein said flux observer (5) is arranged:

- to receive an airgap flux $\overline{\psi}_{ag}^s$ vector signal in a $\alpha\beta$-reference frame from a flux sensor unit (4) via a first abc/$\alpha\beta$-converter (45),

- to receive a stator current $\bar{i}^s{}_s$ vector signal in a αβ-reference frame from said polyphase current sensor/-sensors (31) via a second abc/αβ-converter (43),
- to receive a stator current $\bar{i}_s$ vector signal in a dq-reference frame from a αβ/dq-converter (41), and
- either to receive/calculate a stator voltage reference or to receive a stator voltage $\bar{u}^s{}_s$ vector signal in a αβ-reference frame from polyphase voltage sensor/sensors (32) via a third abc/αβ-converter (44), said polyphase voltage sensor/sensors (32) arranged to measure polyphase stator voltage $u_a$, $u_b$, ... $u_n$ of said asynchronous motor (3),

- to calculate a flux estimate $\hat{\psi}$ utilizing said airgap flux $\overline{\psi}^s_{ag}$ vector signal in a αβ-reference frame, said converted stator current $\bar{i}^s{}_s$ vector signal in a αβ-reference frame, said stator current $\bar{i}_s$ vector signal in a dq-reference frame and either one of said received/calculated stator voltage reference or said stator voltage $\bar{u}^s{}_s$ vector signal in a αβ-reference frame, and

- wherein said flux observer (5) is used in control of said asynchronous motor (3).

**Amended claims in accordance with Rule 137(2) EPC.**

1.  A frequency converter comprising:

    - an inverter unit (2) arranged to drive an asynchronous motor (3); and
    - a flux observer (5),
    - wherein said flux observer (5) is arranged:

        - to receive an airgap flux $\overline{\psi}^s_{ag}$ vector signal in a αβ-reference frame from a flux sensor unit (4) via a first abc/αβ-converter (45),
        - to receive a stator current $\bar{i}^s{}_s$ vector signal in a αβ-reference frame from said polyphase current sensor/-sensors (31) via a second abc/αβ-converter (43),
        - to receive a stator current $\bar{i}_s$ vector signal in a dq-reference frame from a αβ/dq-converter (41),
        - either to receive a stator voltage reference $\bar{u}_{s,ref}$ vector signal in a dq-reference frame calculated by a current controller (8) utilizing said converted stator current $\bar{i}_s$ vector signal in a dq-reference frame, an $i_d$ current reference value $i_{d,ref}$ and an $i_q$ current reference value $i_{q,ref}$ or to receive a stator voltage $\bar{u}^s{}_s$ vector signal in a αβ-reference frame from polyphase voltage sensor/sensors (32) via a third abc/αβ-converter (44), said polyphase voltage sensor/sensors (32) arranged to measure polyphase stator voltage $u_A$, $u_b$, ... $u_n$ of said asynchronous motor (3), and

        - to calculate a flux estimate $\hat{\psi}$ utilizing said airgap flux $\overline{\psi}^s_{ag}$ vector signal in a αβ-reference frame, said stator current $\bar{i}^s{}_s$ vector signal in a αβ-reference frame, said stator current $\bar{i}_s$ vector signal in a dq-reference frame and either one of said stator voltage reference or said stator voltage $\bar{u}^s{}_s$ vector signal in a αβ-reference frame.

2.  An arrangement for controlling an asynchronous motor (3), said arrangement comprising:

    - the frequency converter according to claim 1;
    - the flux sensor unit (4) comprising polyphase flux sensor/sensors placed in the airgap of said asynchronous motor (3) arranged to measure the polyphase airgap flux $\psi_{ag,a}$, $\psi_{ag,b}$, ... $\psi_{ag,m}$ of the asynchronous motor (3); and
    - the polyphase current sensor/sensors (31) arranged to measure polyphase stator current $i_a$, $i_b$, ... $i_n$ of said asynchronous motor (3).

3.  An arrangement according to claim 2, wherein said flux observer (5) is arranged to to calculate a motor angular speed estimate $\hat{\omega}_m$ utilizing one or more of said airgap flux $\overline{\psi}^s_{ag}$ vector signal in a αβ-reference frame, said converted stator current $\bar{i}^s{}_s$ vector signal in a αβ-reference frame, said stator current $\bar{i}_s$ vector signal in a dq-reference frame and either one of said stator voltage reference or said stator voltage $\bar{u}^s{}_s$ vector signal in a αβ-reference frame, and wherein said calculated flux estimate $\hat{\psi}$ and said calculated motor angular speed estimate $\hat{\omega}_m$ being used in establishing a stator voltage reference $\overline{u}^s_{s,ref}$ vector signal in a αβ-reference frame.

4. An arrangement according to claim 2 or to claim 3, wherein said arrangement comprises the polyphase voltage sensor/sensors (32), and wherein said flux observer (5) is arranged to receive a stator voltage $\overline{u}^s_s$ vector signal in a $\alpha\beta$-reference frame from said polyphase voltage sensor/sensors (32) via a third abc/$\alpha\beta$-converter (44) and to utilize said received stator voltage $\overline{u}^s_s$ vector signal in calculating said flux estimate $\hat{\psi}$ and/or said motor angular speed estimate $\hat{\omega}_m$.

5. An arrangement according to claim 2 or to claim 3, which arrangement comprises the current controller (8) arranged to forward said stator voltage reference $\overline{u}_{s,ref}$ vector signal in a dq-reference frame to said flux observer (5), and wherein said flux observer (5) is arranged to utilize said calculated stator voltage reference $\overline{u}_{s,ref}$ vector signal in a dq-reference frame in calculating said flux estimate $\hat{\psi}$ and/or said motor angular speed estimate $\hat{\omega}_m$.

6. An arrangement according to any of the claims 2 to 5, which arrangement comprises the current controller (8), the $\alpha\beta$/dq-converter (41) and a dq/$\alpha\beta$-converter (42),

   - wherein said $\alpha\beta$/dq-converter (41) is arranged to receive the stator current $\overline{i}^s_s$ vector signal in a $\alpha\beta$-reference frame from said polyphase current sensor/sensors (31) via a second abc/$\alpha\beta$-converter (43), to convert the stator current $\overline{i}^s_s$ vector signal in a $\alpha\beta$-reference frame to a stator current $\overline{i}_s$ vector signal in a dq-reference frame, and to forward said converted stator current $\overline{i}_s$ vector signal to the current controller (8), and
   - wherein said dq/$\alpha\beta$-converter (42) is arranged to receive the calculated stator voltage reference $\overline{u}_{s,ref}$ vector signal in a dq-reference frame from said current controller (8), and to convert the stator voltage reference $\overline{u}_{s,ref}$ vector signal in a dq-reference frame to a stator voltage reference $\overline{u}^s_{s,ref}$ vector signal in a $\alpha\beta$-reference frame.

7. An arrangement according to claim 6, which arrangement comprises a flux controller (6), wherein said flux controller (6) is arranged to receive a flux reference $\psi_{ref}$ as an input value, to receive the flux estimate $\hat{\psi}$ from said flux observer (5), to calculate an $i_d$ current reference value $i_{d,ref}$ utilizing said flux reference $\psi_{ref}$ and said flux estimate $\hat{\psi}$, and to forward said calculated $i_d$ current reference value $i_{d,ref}$ to said current controller (8).

8. An arrangement according to claim 7, which arrangement further comprises a speed controller (7) and a torque gain unit (9),

   - wherein said speed controller (7) is arranged to receive a motor angular speed reference $\omega_{m,ref}$ as an input value, to receive the motor angular speed estimate $\hat{\omega}_m$ from said flux observer (5), to calculate a torque reference value $T_{ref}$ utilizing said motor angular speed reference $\omega_{m,ref}$ and said motor angular speed estimate $\hat{\omega}_m$, and to forward said calculated torque reference value $T_{ref}$ to said torque gain unit (9), and
   - wherein said torque gain unit (9) is arranged to receive the calculated torque reference value $T_{ref}$ from said flux observer (5), to calculate an $i_q$ current reference value $i_{q,ref}$ utilizing said calculated torque reference value $T_{ref}$, and to forward said calculated $i_q$ current reference value $i_{q,ref}$ to said current controller (8).

9. An arrangement according to any of the claims 2 to 8, wherein said polyphase flux sensor/sensors of said flux sensor unit (4) comprise two or more hall effect sensors.

10. An arrangement according to claim 9, which arrangement further comprises one or more planar energy harvester coil/coils arranged to provide power to said two or more hall effect sensors.

11. An arrangement according to any of the claims 2 to 8, wherein said polyphase flux sensor/sensors of said flux sensor unit (4) comprise two or more planar energy harvester coils arranged to measure the polyphase airgap flux $\psi_{ag,a}$, $\psi_{ag,b}$, ... $\Psi_{ag,m}$ of the asynchronous motor (3).

12. An arrangement according to claim 8, wherein said current controller (8), said $\alpha\beta$/dq-converter (41), said dq/$\alpha\beta$-converter (42), said flux controller (6), said speed controller (7) and said torque gain unit (9) are realized in a frequency converter.

13. An arrangement according to any of the claims 2, 4 to 7 or 9 to 12, wherein said arrangement comprises a speed sensor unit (33) placed in said asynchronous motor (3) arranged to measure the angular speed $\omega_m$ of the asynchronous motor (3).

14. A method for controlling an asynchronous motor (3), in which method:

- polyphase airgap flux $\psi_{ag,a}$, $\psi_{ag,b}$, ... $\psi_{ag,m}$ of the asynchronous motor (3) is measured (51) by a flux sensor unit (4) comprising polyphase flux sensor/sensors placed in the airgap of said asynchronous motor (3);
- polyphase stator current $i_a$, $i_b$, ... $i_n$ of said asynchronous motor (3) is measured (52) by polyphase current sensor/sensors (31);
- an airgap flux $\overline{\psi}^s_{ag}$ vector signal in a $\alpha\beta$-reference frame, a converted stator current $\bar{i}^s_s$ vector signal in a $\alpha\beta$-reference frame, a stator current $\bar{i}_s$ vector signal in a dq-reference frame and either one of a stator voltage reference or a stator voltage $\overline{u}^s_s$ vector signal in a $\alpha\beta$-reference frame are received (53) by a flux observer (5) as input values; and

-- a flux estimate $\hat{\psi}$ is calculated (54) by said flux observer (5) utilizing said airgap flux $\overline{\psi}^s_{ag}$ vector signal in a $\alpha\beta$-reference frame, said converted stator current $\bar{i}^s_s$ vector signal in a $\alpha\beta$-reference frame, said stator current $\bar{i}_s$ vector signal in a dq-reference frame and either one of said received/calculated stator voltage reference or said stator voltage $\overline{u}^s_s$ vector signal in a $\alpha\beta$-reference frame.

15. A method according to claim 14, in which method:

- stator current $\bar{i}^s_s$ vector signal in a $\alpha\beta$-reference frame of said measured stator current $i_a$, $i_b$, ... $i_n$ is received by a $\alpha\beta$/dq-converter (41) from said polyphase current sensor/sensors (31) via a second abc/$\alpha\beta$-converter (43), and converted to a stator current $\bar{i}_s$ vector signal in a dq-reference frame, and forwarded to a current controller (8);
- stator voltage reference $\overline{u}_{s,ref}$ vector signal in a dq-reference frame is calculated by said current controller (8) utilizing said converted stator current $\bar{i}_s$ vector signal in a dq-reference frame, an $i_d$ current reference value $i_{d,ref}$ and an $i_q$ current reference value $i_{q,ref}$, and
- stator voltage reference $\overline{u}_{s,ref}$ vector signal in a dq-reference frame is converted to a to a stator voltage reference $\overline{u}^s_{s,ref}$ vector signal in a $\alpha\beta$-reference frame by a dq/$\alpha\beta$-converter (42).

**Fig. 1**

EP 4 651 362 A1

Fig. 2

Fig. 3

EP 4 651 362 A1

Fig. 4

EP 4 651 362 A1

**Fig. 5**

Fig. 6

EP 4 651 362 A1

Fig. 7

EP 4 651 362 A1

```
                    ┌──────────┐
                    │  START   │
                    └────┬─────┘
                         │            ◄──────────────────┐
                         ▼                                │
         ┌──────────────────────────────┐                │
         │  MEASURING THREE-PHASE        │────── 51       │
         │  AIRGAP FLUX                  │                │
         └───────────────┬──────────────┘                │
                         ▼                                │
         ┌──────────────────────────────┐                │
         │  MEASURING THREE-PHASE        │────── 52       │
         │  STATOR CURRENT               │                │
         └───────────────┬──────────────┘                │
                         ▼                                │
         ┌──────────────────────────────┐                │
         │  RECEIVING INPUT VALUES       │────── 53       │
         └───────────────┬──────────────┘                │
                         ▼                                │
         ┌──────────────────────────────┐                │
         │  CALCULATING FLUX ESTIMATE    │────── 54       │
         └───────────────┬──────────────┘                │
                         ▼                                │
         ┌──────────────────────────────┐                │
         │  CONTROLLING                  │────── 55       │
         │  ASYNCHRONOUS MOTOR           │                │
         └───────────────┬──────────────┘                │
                         │──────────────────────────────┘
                         ▼
                    ┌──────────┐
                    │   END    │
                    └──────────┘
```

# Fig. 8

**EUROPEAN SEARCH REPORT**

Application Number

EP 24 17 6721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/041171 A1 (CHO BYUNG GUK [KR]) 11 April 2002 (2002-04-11) * the whole document * ----- | 1-15 | INV. H02P21/13 H02P21/14 H02P21/18 |
| A | US 2010/079104 A1 (BECKER ROBERT [DE] ET AL) 1 April 2010 (2010-04-01) * the whole document * ----- | 1-15 | H02P21/24 H02P21/26 H02P21/28 |
| A | US 8 115 441 B2 (ROMENESKO CHARLES J [US]; MADDALI VIJAY K [US] ET AL.) 14 February 2012 (2012-02-14) * the whole document * ----- | 1-15 | |

**TECHNICAL FIELDS SEARCHED (IPC)**

H02P

The present search report has been drawn up for all claims

| Place of search | Date of completion of the search | Examiner |
|---|---|---|
| Munich | 18 October 2024 | Roussel, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6721

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2024

| Patent document cited in search report | | Publication date | Patent family member(s) | | Publication date |
|---|---|---|---|---|---|
| US 2002041171 | A1 | 11-04-2002 | CN | 1339871 A | 13-03-2002 |
| | | | DE | 10140034 A1 | 23-05-2002 |
| | | | JP | 3645509 B2 | 11-05-2005 |
| | | | JP | 2002125400 A | 26-04-2002 |
| | | | KR | 20020014506 A | 25-02-2002 |
| | | | US | 2002041171 A1 | 11-04-2002 |
| US 2010079104 | A1 | 01-04-2010 | AT | E460006 T1 | 15-03-2010 |
| | | | CN | 101536302 A | 16-09-2009 |
| | | | DE | 102006052042 A1 | 15-05-2008 |
| | | | EP | 2087585 A1 | 12-08-2009 |
| | | | ES | 2340339 T3 | 01-06-2010 |
| | | | RU | 2009120393 A | 20-12-2010 |
| | | | US | 2010079104 A1 | 01-04-2010 |
| | | | WO | 2008052714 A1 | 08-05-2008 |
| US 8115441 | B2 | 14-02-2012 | NONE | | |

EPO FORM P0459

For more details about this annex : see Official Journal of the European Patent Office, No. 12/82